# EUROPÄISCHE PATENTSCHRIFT

(11) **EP 2 819 271 B1**
(45) Veröffentlichungstag und Bekanntmachung des Hinweises auf die Patenterteilung: **20.02.2019**
(21) Anmeldenummer: 13173356.0
(22) Anmeldetag: 24.06.2013
(51) Int. Cl.: H02J 9/06, H02J 1/10, H02J 15/00, H02J 11/00

(54) **Energiespeichermodul mit Gleichspannungszwischenkreis**
Energy storage module with intermediate DC circuit
Module de stockage d'énergie avec circuit intermédiaire à tension continue

(43) Veröffentlichungstag der Anmeldung: 31.12.2014
(73) Patentinhaber: Enrichment Technology Company Ltd., 52409 Jülich (DE)
(72) Erfinder: Schäfer, Christoph, 52072 Aachen (DE); vor dem Esche, Rainer, 52525 Heinsberg (DE); Spangenberg, Arne, 52428 Jülich (DE)
(74) Vertreter: FARAGO Patentanwalts- und Rechtsanwaltsgesellschaft mbH

(56) Entgegenhaltungen:
- DE-A1- 4 421 914
- DE-B3-102006 033 562
- US-A1- 2003 020 330
- US-A1- 2005 077 881

## Beschreibung

### Gebiet der Erfindung

Die Erfindung betrifft ein Energiespeichermodul mit Gleichspannungszwischenkreis und ein Verfahren zum Steuern eines solchen Energiespeichermoduls.

### Hintergrund der Erfindung

Die Energie zum Betrieb eines Stromnetzes wird von diversen unterschiedlichen Kraftwerktypen geliefert. Hierbei sind die meisten Kraftwerke, wie beispielsweise Atomkraftwerke, Kohlekraftwerke, Gaskraftwerke, Windenergie-, Biogasanlagen oder Solarkraftwerke, lediglich Energieerzeuger zur Einspeisung von Energie in das nicht-lokale (oder auch externe) Spannungsnetz, gewöhnlich auch als Stromnetz bezeichnet. Nicht-lokale Spannungsnetze sind beispielsweise Übertragungsnetze, wie beispielsweise in Deutschland durch Amprion, 50Hertz, Tennet und TransnetEnBW betrieben. Diese Übertragungsnetze sind Teil des europäischen Verbundnetzes. Die oben angeführten Kraftwerke können als reine Energieerzeuger keine überschüssige Energie im Bedarfsfall aus dem Spannungsnetz aufnehmen und speichern. Energiespeicher können dagegen zur Aufnahme und Abgabe von Energie an ein Spannungsnetz verwendet werden. Energiespeicher sind beispielsweise zentrale Energiespeicher, wie Pumpspeicherwerke, oder dezentrale Energiespeicher, wie beispielsweise Batterien oder Schwungradspeicher. Die Pumpspeicherwerke stellen weitgehend witterungsunabhängige und damit in der Regel immer verfügbare Energiespeicher dar. Zentrale Energiespeicher sind im Allgemeinen auf eine große Kapazität ausgelegt. Zur Bereitstellung von Regelenergie für das nicht-lokale Spannungsnetz sind sie aufgrund der verfügbaren Leistung geeignet, um im nicht-lokalen Spannungsnetz entsprechend Wirkung entfalten zu können. Pumpspeicherkraftwerke können je nach Baugröße eine Leistung von einigen 100 MW und mehr besitzen, wobei die Generatoren allerdings meist dazu ausgelegt sind, unter Volllast Strom zu produzieren und somit die volle Leistung des Pumpspeicherwerks bei entsprechendem Wirkungsgrad zeitnah nutzen zu können. Diese Betriebsweise ist nicht dafür geeignet, die lokale Netzqualität in einem Spannungsnetz mit einem im Vergleich zur Kapazität des Pumpspeicherkraftwerks eher vernachlässigbarem Strombedarf zu stabilisieren oder zu verbessern.

Zentral genutzte Batteriespeicheranlagen sind im Aufbau mit dem Ziel, einen Pilotbetrieb für netzstabilisierende (ortsungebundene) Aufgaben (Regelenergie) zu realisieren. Die bisher geplanten erfüllen jedoch keine ortsgebundenen Aufgaben. Grundsätzlich sind Batteriespeicher jedoch aufgrund ihrer immanenten Zusammenhänge zwischen Leistung, Kapazität und Alterung für derartige Anwendungen mit mehreren Lastzyklen pro Tag nicht gut geeignet und degradieren schnell aufgrund von Temperatureinflüssen, Systemausfällen und Fehlbedienung. Daher sind Batteriespeicher sehr wartungsintensiv. Außerdem stellen Batteriespeicher wegen ihres hohen Brand- und Chemierisiko eine Umwelt- und/oder Wassergefährdung dar, die einen enormen Absicherungsaufwand erfordern.

Dezentrale Energiespeicher sind im Allgemeinen optimiert für die Stabilisierung des lokalen Strombedarfs und für die Lieferung von Regelenergie zur Stützung des nicht-lokalen Spannungsnetzes nicht ausgelegt und nicht qualifiziert. Solche Anlagen können nicht zur Bedarfsdeckung für alle Spannungsnetze beitragen. Eine Verschaltung der dezentralen Speicher zu einer nicht-lokal und lokal wirkenden Anlage erfolgt bisher nicht.

US 7,400,052 B1 offenbart eine Notstromversorgung für eine Last, die unter normalen Bedingungen ausschließlich aus dem Netz als primäre Energiequelle über einen intermediären DC-Bus gespeist wird. Sollte die primäre Energieversorgung ausfallen, so wird die Last vorübergehend über eine Notstromversorgung, die ebenfalls an dem DC-Bus angeschlossen ist, mit Energie versorgt. Dabei umfasst die Notstromversorgung zwei separate Notstromversorgungsquellen, wobei ein Schwungradspeicher für eine schnelle und kurzfristige Notstromversorgung für Netzausfallzeiten vom Bereich 1 Sekunde und eine Gasturbine mit Gasreservoir als die zweite Notstromversorgung für die Überbrückung längerer Netzausfälle vorgesehen ist. Hierbei versorgt während eines Netzausfalls in einem ersten kurzen Zeitintervall ausschließlich der Schwungradspeicher den DC-Bus mit Energie, während in dem nachfolgenden zweiten Zeitintervall sowohl der Schwungradspeicher als auch das Gasturbinenkraftwerk in den DC-Bus einspeist und in dem nachfolgenden dritten Zeitintervall lediglich das Gasturbinenkraftwerk in den DC-Bus einspeist, während der Schwungradspeicher aus dem DC-Bus wieder geladen wird. Somit übernimmt das Gasturbinenkraftwerk auch die Stromversorgung des Schwungradspeichers, die unter Normalbedingungen durch das im Notfallbetrieb nicht vorhandene Netz erfolgt. Damit solche Energiespeicheranlagen ihre Aufgaben zuverlässig erfüllen können, müssen sie mit Notstromaggregaten zum Überbrücken von Netzausfällen für das erste und zweite Zeitintervall ausgerüstet werden. Bei längeren Netzausfällen kann das Gasturbinenkraftwerk die Notstromversorgung als Energiequelle selber übernehmen und muss daher entsprechend groß dimensioniert werden, was aufwendig ist und die Mobilität von dezentralen Energiespeichereinheiten einschränkt, wodurch ihr Betrieb erschwert wird. Die Versorger (a) Schwungradspeicher und (b) Gasturbinenkraftwerk speisen dabei lediglich bei Netzausfall in den DC-Bus ein und werden in US 7,400,052 B1 nicht zur Lieferung von Regelenergie zur Stützung des externen Spannungsnetzes während des Vorhandenseins des Netzes verwendet. Außerdem werden hier die Betriebsaggregate der Schwungradspeicher nicht aus dem DC-Bus gespeist und müssen daher eine separate Energieversorgung besitzen.

Dokument US 2003/0020330 A1 offenbart ein leiterartig ausgestaltetes DC-Übertragungsnetz mit eine ersten positiven DC-Schiene und einer ersten negativen DC-Schiene, die einen ersten DC-Stromnetz zum Transport von DC-Leistung definieren. Eine zweite positive DC-Schiene und eine zweite negative DC-Schiene definieren ein zweites DC-Übertragungsnetz zum Transport von DC-Leistung. Eine Vielzahl an sogenannten elektrischen Leitersprossen verbinden die ersten und zweiten DC-Schienen miteinander, wobei ein Generator an jede Leitersprosse gekoppelt ist. Eine Vielzahl an Unterbrechern sind jeweils mit den Leitersprossen zur individuellen Isolation der einzelnen Leitersprossen von einer der ersten und einer der zweiten DC-Schienen zugeordnet. Dadurch kann das DC Übertragungsnetz ohne Abschalten des DC-Netzes erweitert oder beschränkt werden.

Dokument UUS 2005/077881 offenbart ein Verfahren zum Steuern einer Wechselstromfrequenz von elektrischer Leistung, welche an ein Leistungsverteilungsnetz verteilt wird, wobei das Leistungsverteilungsnetz eine Vielzahl elektrischer Lasten umfasst, welche mit einer Vielzahl von Leistungserzeugungseinrichtungen verbunden sind, und wobei kurzfristige Schwankungen der Vielzahl elektrischer Lasten und eine Fähigkeit der Vielzahl von Leistungserzeugungseinrichtungen den kurzfristigen Schwankungen zu folgen einen zeitveränderlichen Versatz zwischen der Gesamtlast und der Gesamtleistung auf dem Leistungsverteilungsnetz hervorrufen. Hierbei werden ein oder mehrere Schwungradenergiespeichersysteme an das Leistungsverteilungsnetz gekoppelt, ein Signal von einer Array-Steuerung empfangen, die Schwungradenergiespeichersysteme mittels der Array-Steuerung basierend auf dem Signal gesteuert, wobei das Signal von der Last, die auf dem Netz liegt, von der Leistung, die von der Vielzahl von Leistungserzeugungseinrichtungen erzeugt wird, von der Netzfrequenz oder vom zeitlicher Fehler oder Steuerungsfehler abhängt.

Es wäre daher wünschenswert, einen effektiven, umweltverträglichen, ausfallsicheren und leicht zu betreibenden Energiespeicher mit großer Kapazität zur Verfügung zu haben, der es ermöglicht, bedarfsgerecht Energie in angeschlossene externe Spannungsnetze einspeisen oder aus ihnen entnehmen zu können, und im Falle eines Netzausfalls weiterhin betriebsbereit zu bleiben.

### Zusammenfassung der Erfindung

Es ist daher eine Aufgabe der Erfindung, einen effektiven, umweltverträglichen, ausfallsicheren und leicht zu betreibenden Energiespeicher mit großer Kapazität für externe Stromnetze zur Verfügung zu stellen, der es ermöglicht, bedarfsgerecht Energie in angeschlossene externe Spannungsnetze einspeisen oder aus ihnen entnehmen zu können, und im Falle eines Netzausfalls weiterhin betriebsbereit zu bleiben.

Diese Aufgabe wird durch die unabhängigen Ansprüche gelöst. Weitere vorteilhafte Ausführungsformen werden durch die abhängigen Ansprüche offenbart.

Dazu wird ein Energiespeichermodul zur reversiblen Speicherung von elektrischer Energie vorgeschlagen, umfassend mehrere elektrisch parallel über einen gemeinsamen innerhalb des Energiespeichermoduls angeordneten Gleichspannungszwischenkreis verbundene Schwungradspeichereinheiten und ein erstes mit dem Gleichspannungszwischenkreis verbundenes Regelsystem des Energiespeichermoduls, das in einem Normalbetrieb den Gleichspannungszwischenkreis mit einem oder mehreren außerhalb des Energiespeichermoduls angeordneten externen Spannungsnetzen zur Aufnahme / Abgabe von Energie an / in das oder die externen Spannungsnetze verbindet, wobei das Energiespeichermodul des Weitern ein zweites Regelsystem mit einer Eingangsseite und einer Ausgangsseite umfasst, wobei die Eingangsseite zumindest mit dem Gleichspannungszwischenkreis und die Ausgangsseite mit einem internen Versorgungsnetz des Energiespeichermoduls zur Versorgung ein oder mehrerer zum Betrieb der Schwungradspeichereinheiten benötigter strombetriebener Betriebsaggregate verbunden ist, wobei alle strombetriebenen Betriebsaggregate der Schwungradspeichereinheiten an das interne Versorgungsnetz angeschlossen sind, das im Normalbetrieb (NO) direkt oder indirekt über den Gleichspannungszwischenkreis (3) mit dem externen Spannungsnetze (ES2) zur Energieversorgung der Betriebsaggregate (51, 52, 53, 54) verbunden ist, wobei das zweite Regelsystem dazu ausgestaltet ist, zumindest in einem Notfallbetrieb bei fehlendem externen Spannungsnetz den Gleichspannungszwischenkreis mit dem internen Versorgungsnetz zu verbinden und das interne Versorgungsnetz zum fortgeführten Betrieb der Schwungradspeichereinheiten mit einer erforderlichen Versorgungsleistung alleine aus dem Gleichspannungszwischenkreis zumindest in einem ersten Zeitintervall zu versorgen.

Durch die Verwendung von Schwungradspeichereinheiten wird die Energie in Form mechanischer Rotationsenergie gespeichert. Diese Form der Energiespeicherung benötigt keine chemischen und/oder brandgefährlichen Stoffe, so dass von solchen Speichern keine Umwelt- und Wassergefährdung ausgeht. Der Anschluss der einzelnen Schwungradspeichereinheiten elektrisch parallel an einen Gleichspannungszwischenkreis erlaubt die Zusammenfügung der einzelnen Einheitenkapazitäten und Einheitenleistungen der jeweiligen Schwungradspeichereinheiten zu einer gemeinsame Modulspeicherkapazität und Modulleistung für das Energiespeichermodul mit einem geringen technischen Aufwand. Außerdem sind im Prinzip beliebig viele Schwungradspeichereinheiten zu dem Gleichspannungszwischenkreis elektrisch parallel hinzu schaltbar, wodurch Modulkapazität und Modulleistung an den Bedarf anpassbar und im Prinzip für das Energiespeichermodul beliebig skalierbar sind. Dadurch wird ein Energiespeichermodul bereitgestellt, das eine große Kapazität besitzt, die es ermöglicht, neben einer Verbesserung der lokaler Netzqualität in lokalen Spannungs- beziehungsweise Stromnetzen (beispielsweise Wechselspannungsnetze) auch die Versorgungssicherheit für nicht-lokale Spannungs- beziehungsweise Stromnetze (beispielsweise Wechselspannungsnetze) erreichen zu können.

Bei der Verwendung von nur einem großen Netzwechselrichter als erstes Regelsystem hat man geringere Verluste als bei einer Verwendung von mehreren kleinen Netzwechselrichtern, wenn beispielsweise alle Schwungradspeichereinheiten separat voneinander mit eigenen Netzwechselrichtern an ein Stromnetz angeschlossen wären. Die Verwendung von nur einem großen Netzwechselrichter ist zudem kostengünstiger im Vergleich zur Verwendung mehrerer kleinerer Netzwechselrichter. Das erfindungsgemäße Energiespeichermodul als Energiespeicher kann somit mit genügender Wirkung für beide Zwecke betrieben werden. Das Energiespeichermodul kann zudem sehr effektiv betrieben werden, da die bereitgestellte Modulspeicherkapazität und Modulleistung durch eine geeignete Wahl der Anzahl an Schwungradspeichereinheiten, die an den Gleichstromzwischenkreis angeschlossen werden, auf die jeweiligen Bedürfnisse angepasst und somit ungenutzte Überkapazitäten vermieden werden können. Die Regelung des Gleichspannungszwischenkreises auf eine Soll-Gleichspannung ist außerdem einfach zu realisieren, was die Gesamtregelung des Energiespeichermoduls vereinfacht. Außerdem wird durch die elektrisch parallele Anordnung der Schwungradspeichereinheiten eine Fehlerredundanz erreicht, die es verhindert, dass durch den Ausfall einer Schwungradspeichereinheit die Verfügbarkeit des Energiespeichermoduls für seine Regel- und Systemaufgaben in den angeschlossenen externen Stromnetzen (beispielsweise Wechselspannungsnetzen) wesentlich beeinträchtigt. Damit wird die Ausfallsicherheit des Energiespeichermoduls erhöht. Die Soll-Gleichspannung hängt dabei von den angeschlossenen externen Stromnetzen und den im Energiespeichermodul verwendeten Bauteilen ab.

Ein technisch sinnvoller Bereich für die Spannung im Gleichspannungszwischenkreis bei Anschluss der Anlage an ein Niederspannungsnetz liegt zum Beispiel zwischen 550V und 1000V. Die untere Grenze wird im wesentlichen durch die Spannungslage des Niederspannungsnetzes definiert, wohingegen die obere Grenze im wesentlichen durch die technischen Eigenschaften der verwendeten Bauteile im Energiespeichermodul bestimmt wird. Für Mittelspannungsnetze oder Gleichspannungsnetze kann die Soll-Gleichspannung im Zwischenkreis aus technischen und wirtschaftlichen Gründen auch bei anderen Werten liegen, die sich an der Spannungslage dieser Netze orientiert. In einem Ausführungsbeispiel ist die Soll-Gleichspannung im Gleichspannungszwischenkreis 750 V ± 5 V. Die vorliegenden Werte der Gleichspannung im Gleichspannungszwischenkreis können beispielsweise über eine geeignete Ausgestaltung des ersten Regelsystems, über eine entsprechende Messeinrichtung im Gleichspannungszwischenkreis und/oder über die Motorregelungen der Schwungradspeichereinheiten bestimmt und anschließend der Regelung zu Grunde gelegt werden. Dabei wird die Gleichspannung des Gleichspannungszwischenkreises ausschließlich über Schwungradspeichereinheiten und bei Vorhandensein des externen Spannungsnetzes (Normalbetrieb des Energiespeichermoduls) auch über das erste Regelsystem durch das oder die angeschlossenen externen Spannungsnetze gestützt. Weitere Energiequellen anderer Art sind an den Gleichspannungszwischenkreis nicht angeschlossen. Im Normalbetrieb sind auch keine weiteren Energiesenken an den Gleichspannungszwischenkreis angeschlossen. Bei einem Netzausfall, auch bei einem längeren Netzausfall von beispielsweise mehreren Stunden oder mehr, wird die Gleichspannung im Gleichspannungszwischenkreis ausschließlich durch die Schwungradspeichereinheiten gestützt. Dieser Betriebszustand wird als Notfallbetrieb bezeichnet.

Als Schwungradspeichereinheit wird hierbei die funktionale Einheit mit einem Rotor als Schwungmasse, über dessen Rotation die Energie in Form von mechanischer Rotationsenergie gespeichert wird, und mit Betriebsaggregaten wie Lager- und Motorkomponenten zum Beschleunigen, Abbremsen und Drehen des Rotors bei einer bestimmten Drehzahl, einem elektromagnetischen Wandler zur Umwandlung elektrischer in mechanische Energie und umgekehrt und Anschlüsse an andere Betriebsaggregate wie beispielsweise das Vakuumsystem oder eine interne Stromversorgung über das interne Versorgungsnetz, bezeichnet. Rotoren von Schwungradspeichereinheiten können je nach Ladezustand mit Drehzahlen auch von 50000 Umdrehungen pro Minute rotieren. Ein typischer Drehzahlbereich liegt zwischen 15000 Umdrehungen pro Minute und der maximalen Drehzahl. Die einzelnen Schwungradspeichereinheiten besitzt eine Einheitenkapazität und Einheitenleistung, die von den Betriebsbedingungen, wie beispielsweise Drehzahl des Rotors und Auslegung des elektromagnetischen Wandlers, abhängen. Beispielsweise kann die Einheitenkapazität circa 5 kWh und die maximale Einheitenleistung bis 200 kW betragen. Die Speicherung der Energie in Form von Rotationsenergie ist reversibel, da aus den Schwungradspeichereinheiten je nach Bedarf die als Rotationsenergie gespeicherte Energie wieder entnommen und als elektrische Energie über den Gleichspannungszwischenkreis und das Regelsystem in ein externes Stromnetz eingespeist werden kann und umgekehrt. Schwungradenergiespeicher besitzen den Vorzug, dass sie die aufzunehmenden oder abzugebenden Mengen an Energie sehr variabel und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage, Wasserstoffspeicheranlagen mit Wasserstofftanks mit dem brennbaren Wasserstoff oder Drucklufttanks als Gefahrenpotential. Somit stellen Schwungradspeichereinheiten eine umweltsicherere Technologie für die Energiebereitstellung im Vergleich zu anderen Speichertechnologien dar und sind für beliebig viele Lastzyklen pro Tag gut geeignet. Bei der Energiebereitstellung oder Leistungsbereitstellung wird von negativer Energiebereitstellung (-fluss) oder negativer Leistungsbereitstellung (-fluss) "En" gesprochen, wenn Energie oder Leistung aus dem externen Spannungsnetz und/oder dem Gleichspannungszwischenkreis aufgenommen und in den Schwungradspeichereinheiten in Form von mechanischer Rotationsenergie gespeichert wird. Entsprechend wird von positiver Energiebereitstellung (-fluss) oder Leistungsbereitstellung (-fluss) "Ep" gesprochen, wenn aus den Schwungradspeichereinheiten die in Form von mechanischer Rotationsenergie gespeicherte Energie oder Leistung mittels Abbremsen der Schwungräder (oder Rotoren) in das externe Spannungsnetz und/oder den Gleichspannungszwischenkreis als elektrische Energie oder Leistung eingespeist wird. Hierbei ist die Fähigkeit von Schwungradspeichern, Energie innerhalb von wenigen Millisekunden zur Verfügung stellen zu können, ebenso vorteilhaft wie die Fähigkeit, die spezifizierte Leistung über einen Zeitraum von vielen Minuten und mehr zu liefern. Bei einer Drehzahl von zum Beispiel 50000 Umdrehungen pro Minute kann eine Schwungradspeichereinheit je nach Ausführung eine Leistung bis 200 kW aufnehmen oder abgeben. In einer Ausführungsform ist die Anzahl der Schwungradspeichereinheiten im Schwungradmodul darauf angepasst, eine Modulspeicherkapazität für das Energiespeichermodul bereitzustellen, die mindestens ausreicht, um über einen Zeitraum von mehr als 30s Nennstrom in ein nicht-lokales Spannungsnetz (Stromnetz) einspeisen zu können.

Zum Betrieb des Energiespeichermoduls, insbesondere zum Betrieb der Schwungradspeichereinheiten umfasst dieses eine Mehrzahl an Betriebsaggregaten wie beispielsweise Schwungradmotor, Umrichter, ein Vakuumsystem mit Vakuumpumpen, ein Kühlsystem mit Kühlaggregaten, eine Modulsteuerung und diverse weitere elektrisch zu betreibende Komponenten und Sensoren. Alle diese Betriebsaggregate müssen für einen störungsfreien Normalbetrieb mit elektrischer Energie versorgt werden. Beispielsweise würde ein ausgefallenes Kühlsystem zu einem Überhitzen der Schwungradspeichereinheiten, insbesondere der Lager der Rotoren in den Schwungradspeichereinheiten führen. Da diese Rotoren in einem Vakuum, beispielsweise kleiner 10⁻³bar, betrieben werden müssen, um die Reibungsverluste im Normalbetrieb möglichst gering zu halten, würde ein Ausfall des Vakuumsystems zu einem erhöhten Energieverlust führen, der automatisch auch einen Temperaturanstieg aufgrund der Reibungswärme im Energiespeichermodul zur Folge hätte. Bei einem nicht mehr durch das externe Spannungsnetz versorgten internen Versorgungsnetz für die Betriebsaggregate würde dieses ebenfalls kurzfristig zusammenbrechen, woraufhin die Betriebsaggregate ausfallen und die entsprechenden negativen Folgen für das Energiespeichermodul eintreten würden.

Da aber bei einem solchen Ausfall des externen Spannungsnetzes das Energiespeichermodul in der Regel eine beträchtliche Menge an Energie bei einer typischen mittleren Aufladung von 50% weiterhin gespeichert hat und diese an den Gleichspannungszwischenkreis ja nach Bedarf über einen längeren Zeitraum abgeben kann, können die Schwungradenergiespeicher als interne Notstromversorgung über den Gleichspannungszwischenkreis für die Betriebsaggregate fungieren, ohne dass eine zusätzliche aufwendig und zu extra zu wartende Notstromversorgung im Energiespeichermodul installiert und überwacht, beziehungsweise gewartet werden muss. Durch den Anschluss des Gleichstromzwischenkreises über das zweite Regelsystem an das interne Versorgungsnetz, an das wiederum die Betriebsaggregate (Betriebsaggregate der einzelnen Schwungradspeichereinheiten und Betriebsaggregate des Energiespeichermoduls zum Betrieb der Schwungradspeichereinheiten) angeschlossen sind, kann die in den Schwungradenergiespeichereinheiten vorhandene Energie auf einfache und sichere Art und Weise dem internen Versorgungsnetz solange zur Verfügung gestellt werden, bis das externe Spannungsnetz zur Versorgung des internen Versorgungsnetzes wieder zur Verfügung steht. Somit können Netzausfälle von etlichen Minuten und mehr überbrückt werden, bei denen das Energiespeichermodul weiter betriebsbereit für das später wieder anzubindende externe Spannungsnetz bleibt. Damit kann auf eine Notstromversorgung durch beispielsweise eine Gasturbine, Dieselgeneratoren oder Notfallbatterien verzichtet werden, was eine Reduzierung der für den ausfallsicheren Betrieb des Energiespeichers benötigten Komponenten erlaubt. Eine Reduzierung der Komponentenanzahl ermöglicht gleichzeitig einen effektiveren, umweltverträglicheren und einfacheren Betrieb, da somit auch keine Notstromaggregate bereitgestellt und gewartet werden müssen. Durch die Vermeidbarkeit von solchen zusätzlichen Notstromaggregaten kann das Energiespeichermodul leichter als kompakte mobile Einheit zum variablen und zeitlich begrenzten Einsatz an unterschiedlichen geographischen Orten verwendet werden. Die interne Stromversorgung aus dem Gleichspannungszwischenkreis ermöglicht eine Überbrückung eines zeitlich begrenzten Netzausfalls und erlaubt bei einem länger andauernden Netzausfall ein kontrolliertes Herunterfahren der Schwungradspeichereinheiten in einem Stopp-Modus unter Verwendung der Restenergie in den Schwungradspeichereinheiten. Würde keine Energiezulieferung aus dem Gleichspannungszwischenkreis an die Betriebsaggregate möglich sein, würde ein Netzausfall jeweils ein unkontrolliertes Not-Aus oder einen Absturz für die Schwungradspeichereinheiten mit den daraus möglicherweise resultierenden Schäden für die Energiespeicheranlage zur Folge haben.

Durch das erfindungsgemäße Energiespeichermodul wird ein effektiver, umweltverträglicher, ausfallsicherer und leicht zu betreibender Energiespeicher mit großer Kapazität zur Durchführung von Regel- und Systemaufgaben in externen Spannungsnetzen zur Verfügung gestellt, der es ermöglicht, bedarfsgerecht Energie in angeschlossene externe Spannungsnetze einspeisen oder aus ihnen entnehmen zu können, und im Falle eines zeitlich begrenzten Netzausfalls für den nachfolgenden Normalbetrieb weiterhin betriebsbereit zu bleiben.

Das erste Regelsystem regelt dabei in Normalbetrieb mit vorhandenem externem Spannungsnetz den Energiefluss zwischen einem oder mehreren angeschlossenen externen Spannungsnetzen (lokales Stromnetz und/oder nicht-lokales Stromnetz) und den Schwungradspeichereinheiten des Energiespeichermoduls. Das erste Regelsystem regelt dabei die Gleichspannung des Zwischenkreises im Wesentlichen konstant auf eine Soll-Gleichspannung, beispielsweise 750 V. Der Ausdruck "im Wesentlichen konstant" bedeutet, dass die Gleichspannung durchaus temporär innerhalb zulässiger Toleranzen, beispielsweise ±5 V, schwanken kann, wobei das erste Regelsystem stets derart regelt, dass die tatsächlich vorliegende Gleichspannung des Zwischenkreises der Soll-Gleichspannung nachgeführt wird, beziehungsweise im Idealfall entspricht. Der Toleranzbereich kann aber auch größer als die oben angegebenen Werte sein. Das erste Regelsystem schafft diese Regelung, indem es sich des externen Spannungsnetzes oder der externen Spannungsnetze je nach Leistungsflussrichtung als unerschöpfliche Stromquelle (Laden der Schwungradspeichereinheiten mit Energie) beziehungsweise als Senke für die überschüssige Energie im Gleichspannungszwischenkreis bedient. Geeignete erste Regelsysteme umfassen dazu einen oder mehrere Netzwechselrichter oder Hoch-/Tiefsetzsteller. Diese Art der Regelung über das erste Regelsystem betrifft nur den Normalbetrieb, da bei einem Fehlen der externen Spannungsnetze diese dem Energiespeichermodul nicht mehr als Energiequelle oder Senke zur Verfügung stehen.

Das zweite Regelsystem kann im erfindungsgemäßen Energiespeichermodul sowohl (a) im Normal- als auch im Notfallbetrieb das Versorgungsnetz mit dem Gleichspannungszwischenkreis zur Versorgung des Versorgungsnetzes mit Energie aus dem Gleichspannungszwischenkreis verbinden und wird entsprechend für den Normal- als auch für den Notfallbetrieb gesteuert oder (b) das zweite Regelsystem stellt lediglich im Notfallbetrieb eine Verbindung des Versorgungsnetzes mit dem Gleichspannungszwischenkreis zur Versorgung des Versorgungsnetzes im Notfallbetrieb mit Energie aus dem Gleichspannungszwischenkreis her. Im letzteren Fall wird das Versorgungsnetz direkt aus einem externen Spannungsnetz im Normalbetrieb mit Energie versorgt. Dagegen wäre im ersten Fall keine separater Anschluss des Versorgungsnetzes mit einem externen Spannungsnetz notwendig, da diese Verbindung indirekt über den Gleichspannungszwischenkreis und das erste und zweite Regelsystem bereits besteht.

In einer Ausführungsform regelt im Notfallbetrieb das zweite Regelsystem die Versorgungsnetzspannung im internen Versorgungsnetz durch bedarfsgerechte Stromlieferung aus dem Gleichspannungszwischenkreis im Wesentlichen konstant. Das zweite Regelsystem regelt dabei im Notfallbetrieb bei nichtvorhandenem externem Spannungsnetz den Energiefluss zwischen dem Gleichspannungszwischenkreis und dem internen Versorgungsnetz, wobei das zweite Regelsystem dabei die Versorgungsspannung auf eine Sollspannung für das interne Versorgungsnetz regelt. Das Versorgungsnetz kann dabei je nach Ausführungsform unterschiedliche Versorgungsspannungen ausweisen, beispielsweise 240 V-AC oder 230 V-AC oder 110 V-DC oder 24 V-DC, oder ist in mehrere Sub-Versorgungsnetze, gegebenenfalls mit unterschiedlichen Sub-Versorgungsnetzspannungen aufgespalten. Der Ausdruck "im Wesentlichen konstant" bedeutet, dass die Spannung durchaus temporär innerhalb zulässiger Toleranzen, beispielsweise ±5 V, schwanken kann, wobei das zweite Regelsystem stets derart regelt, dass die tatsächlich vorliegende Spannung des internen Versorgungsnetzes der Soll-Spannung nachgeführt oder dieser im Idealfall entspricht. Das zweite Regelsystem schafft diese Regelung, indem es sich des Gleichspannungszwischenkreises als quasi-externe und quasiunerschöpfliche Energiequelle bedient. Der Ausdruck "quasi-extern" bezeichnet die Anordnung der Energiequelle (Gleichspannungszwischenkreis) außerhalb des Versorgungsnetzes, woher das interne Versorgungsnetz mit Energie versorgt wird. Der Ausdruck "quasi-unerschöpflich" bezeichnet hier die große Differenz zwischen in der Regel über die Schwungradenergiespeicher verfügbare große Energiemenge und die relativ geringen Energiemenge, die pro Zeiteinheit durch die Betriebsaggregate verbraucht und daher an das interne Versorgungsnetz aus dem Gleichspannungszwischenkreis nachgeliefert werden muss. Geeignete zweite Regelsysteme umfassen dazu einen oder mehrere Netzwechselrichter oder Hoch-/Tiefsetzsteller.

In einer Ausführungsform ist die Eingangsseite des zweiten Regelsystems zusätzlich mit einem externen Spannungsnetz verbunden und das zweite Regelsystem ist dazu vorgesehen, die Versorgungsleistung für das interne Versorgungsnetz im Normalbetrieb aus dem externen Spannungsnetz und im Notfallbetrieb aus dem Gleichspannungszwischenkreis bereit zu stellen. Damit muss das zweite Regelsystem lediglich im Notfallbetrieb den Leistungsfluss vom Gleichspannungszwischenkreis zum Versorgungsnetz regeln und würde im Normalbetrieb beispielsweise nicht zur Umwandlung der Gleichspannung in eine mögliche Wechselspannung im Versorgungsnetz (als Wechselspannungsnetz) beansprucht, sondern bekäme diese Wechselspannung bereits durch das externe Spannungsnetz angeboten und müsste diese nur auf die Sollspannung im Versorgungsnetz regeln. Somit würde das zweite Regelsystem weniger stark regelungstechnisch beansprucht. Damit wird außerdem bei einem gewünschten Anschluss des Versorgungsnetzes an ein externes Spannungsnetz eine zusätzliche separate Komponente zum Anschluss des internen Versorgungsnetzes an das externe Stromnetz vermieden.

In einer anderen Ausführungsform ist das Energiespeichermodul dazu ausgestattet, die Gleichspannung im Gleichspannungszwischenkreis kontinuierlich zu überwachen, wobei die Schwungradspeichereinheiten jeweils Motorregelungen umfassen, die dafür ausgestaltet sind, unabhängig von einer Modulsteuereinheit zur Steuerung der Schwungradspeichereinheiten im Normalbetrieb im Notfallbetrieb zumindest auf Basis der überwachten Gleichspannung die Gleichspannung im Gleichspannungszwischenkreis über Energieabgabe aus den jeweiligen Schwungradspeichereinheiten nicht unter einen unteren Schwellenwert absinken zu lassen, zumindest solange die in den jeweiligen Schwungradspeichereinheiten gespeichert Menge an Energie nicht unter eine Mindestenergie absinkt. Für einen Stützbetrieb des internen Versorgungsnetzes darf die Spannung im Gleichspannungszwischenkreis nicht unter die Spannung im Versorgungsnetz absinken. Vorzugsweise wird die Spannung im Gleichspannungszwischenkreis zwischen der Sollspannung des Normalbetriebs und der Sollspannung des internen Versorgungsnetzes mittels Energieeinspeisung aus den Schwungradenergiespeichereinheiten gehalten. In dieser Ausführungsform wäre der untere Schwellenwert der Sollwert der Versorgungsnetz-Sollspannung. In einer bevorzugten Ausführungsform wird auch bei einem temporären Ausfall des externen Stromnetzes die Spannung des Gleichspannungszwischenkreises auf die Sollspannung des Normalbetriebs, beispielsweise 750 V, geregelt. In dieser Ausführungsform wäre der untere Schwellenwert beispielsweise 745 V. Hierbei könnte das Energiespeichermodul ohne Anpassungszeit sofort nach dem erneuten Vorhandensein des externen Spannungsnetzes wieder in den Normalbetrieb übergehen, da ein Hochfahren der Spannung im Gleichspannungszwischenkreis auf dem Sollwert nicht notwendig ist, da auf diesen bereits vorher geregelt wurde.

In einer anderen Ausführungsform ist im Gleichspannungszwischenkreis mindestens eine Messeinrichtung zur Messung der Gleichspannung im Gleichspannungszwischenkreis angeordnet und zumindest mit den jeweiligen Motorregelungen der Schwungradspeichereinheiten verbunden. Diese Messeinrichtung liefert den Motorregelungen die momentane Gleichspannung im Gleichspannungszwischenkreis und kann für die Steuerung der Schwungradspeichereinheiten zur Regelung auf eine Sollspannung verwendet werden. Eine solche Messeinrichtung kann sehr präzise die vorhandene Spannung messen und mit den Messdaten eine genaue Basis für die Spannungssteuerung bereitstellen. Geeignete Messeinrichtungen zur Messung der Spannung sind dem Fachmann bekannt.

In einer Ausführungsform sind die Motorregelungen der einzelnen Schwungradspeichereinheiten unabhängig von der Modulsteuereinheit direkt miteinander verbunden und umfassen jeweils eine Schwungradsteuerung, die dafür vorgesehen ist, einen gemeinsam koordinierten Stützbetrieb der Gleichspannung im Gleichspannungszwischenkreis durch alle Schwungradspeichereinheiten im Notfallbetrieb auszuführen. Somit können die Schwungradspeichereinheiten schneller auf Spannungsänderungen reagieren und einen präziseren Stützbetrieb durchführen. Die Motorregelungen reagieren beispielsweise um eine Größenordnung schneller als die ersten oder zweiten Regelsysteme. Mit einer direkten Kommunikation der Schwungradspeichereinheiten kann diese Schnelligkeit besser ausgenutzt werden.

In einer alternativen Ausführungsform ist die Modulsteuereinheit nicht nur im Normalbetrieb, sondern auch im Notfallbetrieb zur Übermittlung der für den Notfallbetrieb geeigneten Drehmomentvorgaben an die Schwungradspeichereinheiten zur Abgabe von Energie an den Gleichspannungszwischenkreis vorgesehen. Dabei kann die Modulsteuereinheit zu einer zeitbezogenen Generierung und Übermittlung der Drehmomentvorgaben für die Schwungradspeichereinheiten vorgesehen sein, woraufhin die Schwungradspeichereinheiten im Notfallbetrieb aufgrund der zeitbezogenen Drehmomentvorgaben Strom in den Gleichspannungszwischenkreis einspeisen, um das Spannungspotential im Gleichspannungszwischenkreis auf einen möglichst konstanten Wert oberhalb des Schwellenwertes zu regeln. Dazu erhält jede Schwungradspeichereinheit individuelle Drehmomentvorgaben von der Modulsteuereinheit. Durch diese individuelle Ansteuerung der einzelnen Schwungradenergiespeichereinheiten können unterschiedliche Ladezustände der einzelnen Schwungradspeichereinheiten berücksichtigt werden, so dass nach Möglichkeit für keine der Schwungradspeichereinheiten die jeweilige Drehzahl unter eine minimale Drehzahl fällt, da sonst bei einer unvorteilhaft kleinen Drehzahl der jeweilige Rotor der Schwungradspeichereinheit nicht mehr optimal belagert und betrieben werden kann.

In einer Ausführungsform umfasst zu einer optimalen Energieeinspeisung (oder Energieaufnahme) jede der Schwungradspeichereinheiten einen elektromagnetischen Wandler, der elektrisch über eine Motorregelung, vorzugsweise einen Frequenzumrichter, an den Gleichspannungszwischenkreis angeschlossen ist. Der elektromagnetische Wandler wird im Folgenden auch als Motor bezeichnet. Die Motorregelung ist über Datenleitungen mit der Modulsteuereinheit zum Erhalt von Sollwertvorgaben (beispielsweise Drehmomentvorgaben) verbunden und kann dabei im Rahmen ihrer Strom- und Leistungsbegrenzungen beliebige Strombeiträge aus dem Gleichspannungszwischenkreis beziehen (laden, Energie aufnehmen) beziehungsweise an den Gleichspannungszwischenkreis abgeben (entladen, Energie abgeben). Alle Komponenten des Gleichspannungskreises sind dabei so ausgelegt, dass eine gegenseitige Beeinflussung, wie beispielsweise ein Kurzschluss oder ein Aufschwingen des Gleichspannungszwischenkreises, ausgeschlossen ist.

Damit die Steuerung der Schwungradspeichereinheiten individuell auf deren Ladezustand angepasst werden kann, ruft in einer Ausführungsform die Modulsteuereinheit aktuelle Drehzahlen der einzelnen Schwungradspeichereinheiten aus deren Motorregelungen ab und bestimmt den jeweiligen aktuellen Ladezustand der einzelnen Schwungradspeichereinheiten aus der abgerufenen Drehzahl aufgrund einer in der Modulsteuerung hinterlegten Beziehung zwischen Drehzahl und Ladezustand. Die möglichen Drehzahlen können zwischen einer maximalen und einer minimalen Drehzahl (im Extremfall keine Drehung) variieren, wobei der Ladezustand bei maximaler Drehzahl 100 % beträgt. Somit ergibt sich der aktuelle Ladezustand aus der jeweils aktuellen Drehzahl. Der Abruf der Drehzahlen kann dabei periodisch, beispielsweise mit einer Frequenz von 1 Hz, erfolgen. Die aktuelle Drehzahl kann dabei als Reaktion auf ein entsprechendes aktives Abrufsignal, ausgesendet durch die Modulsteuereinheit, erfolgen oder durch die Motorregelungen selbständig erfolgen (passiver Abruf durch die Modulsteuereinheit). Die selbständige Übermittlung durch die Motorregelung kann kontinuierlich erfolgen oder lediglich nach einer Änderung der Drehzahl um einen vorher festgelegten Wert. Ein typischer Drehzahlbereich im Normalbetrieb ist beispielsweise 300Hz - 800Hz mit ±5% als zulässiger Toleranzbereich.

In einer Ausführungsform sind in der Motorregelung der Schwungradspeichereinheiten eine obere Drehzahlbegrenzung und/oder eine untere Drehzahlbegrenzung implementiert. Diese vor Ort (in den Schwungradspeichereinheiten) vorhandene Drehzahlbegrenzung dient dem Maschinenschutz vor einer Überladung der Schwungradspeichereinheit oder als Tiefentladungsschutz. In einer bevorzugten Ausführungsform ist die obere Drehzahlbegrenzung und/oder untere Drehzahlbegrenzung durch ein Bauteil, beispielsweise ein separater Mikrokontroller, implementiert. Die Drehzahlbegrenzung kann aber auch mit einem Softwareprogramm in der Motorsteuerung implementiert sein. Eine so genannte hardwaremäßige Installation durch das zusätzliche Bauteil garantiert die Funktionstüchtigkeit der Drehzahlbegrenzungen unabhängig vom Funktionszustand der Motorregelung. In gleicher Weise sind in der Motorregelung hardwareseitig durch geeignete Maßnahmen Begrenzungen für maximale Drehmomente bzw. Strombeiträge in oder aus dem Gleichspannungszwischenkreis vorgesehen.

In einer weiteren Ausführungsform sind in der Modulsteuereinheit obere Drehzahlbegrenzungen und/oder untere Drehzahlbegrenzungen für die Drehmomentvorgaben implementiert. In einer bevorzugten Ausführungsform sind die Drehzahlbegrenzungen als Anweisung in einem Computerprogramm implementiert, damit gegebenenfalls veränderte Drehzahlbegrenzungen schnell ausgeführt werden können. Die Drehzahlbegrenzungen in der Modulsteuereinheit brauchen nicht dieselben Drehzahlbegrenzungen wie in den Motorregelungen zu sein. Letztere dienen dem Maschinenschutz. Die Drehzahlbegrenzungen in der Modulsteuereinheit können dagegen zu einer Steuerung des Energiespeichermoduls in einem besonders effektiven Drehzahlbereich dienen. Die oberen/unteren Drehzahlbegrenzungen in der Modulsteuereinheit liegen dabei bei Werten nicht höher/niedriger als die obere/untere Drehzahlbegrenzung in den Motorregelungen. Die Drehzahlbegrenzungen bzw. maximalen Drehmomente und Ströme in den Motorregelungen werden in dieser Ausführungsform von der Modulsteuereinheit bei der Berechnung der zu übermittelnden Drehmomentvorgaben berücksichtigt.

In einer Ausführungsform umfasst das Energiespeichermodul ein oder mehrere Messeinheiten zur kontinuierlichen Messung der Spannungsqualität der mit dem Energiespeichermodul verbundenen externen Spannungsnetze, wobei die Messeinheit oder die Messeinheiten dazu ausgestaltet sind, bei einer Über- oder Unterspannung zumindest in einem der angeschlossenen externen Spanungsnetze ein Notfallbetriebssignal innerhalb des Energiespeichermoduls auszusenden. Dabei ist das Energiespeichermodul, insbesondere das zweite Regelsystem dazu vorgesehen, als automatische Reaktion auf das Notfallbetriebssignal vom Normalbetrieb in den Notfallbetrieb zu wechseln. Kommt es zu einer Störung oder Ausfall des oder der externen Spannungsnetze, so muss oder müssen dieses von dem Energiespeichermodul getrennt werden und es tritt der Notfallbetrieb ein. Die Messeinheiten ermöglichen mit der kontinuierlichen Messung ein frühzeitiges Detektieren einer eventuell gefährlichen Unter- oder Überspannung im externen Stromnetz, so dass über Netztrennung das Energiespeichermodul vor Schäden geschützt wird, was die Ausfallsicherheit des Energiespeichermoduls erhöht. Die Messeinheiten können dabei in den externen Spannungsnetzen integriert oder an einer oder mehreren Stellen an den externen Spannungsnetzen angeordnet sein. Die Messeinheiten können auch am Verbindungspunkt zwischen dem Energiespeichermodul und den externen Spannungsnetzen angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, der Phasenwinkel, die Sternpunkte, die Netzfrequenz, der Netzstrom und andere Größen. Bei einer gewünschten Netzfrequenz eines externen Wechselspannungsnetzes von 50 Hz können die Messeinheiten über ein Absinken der Netzfrequenz feststellen, ob das externe Spannungsnetz gerade wegbricht oder nicht. Weitere Beispiele für Messgrößen sind die Messung des Phasenwinkels in einem lokalen Wechselspannungsnetz, oder die Spannungsmessung im Falle von zu viel oder zu wenig Lastabnahme im externen Spannungsnetz zum Erhalt der Spannungsqualität. Dabei ist das zweite Regelsystem dafür vorgesehen, aufgrund des Notfallbetriebssignals das interne Versorgungsnetz mit der erforderlichen Versorgung aus dem Gleichspannungszwischenkreis zu versorgen.

In einer anderen Ausführungsform wird nicht nur das Betreiben des Energiespeichermoduls in Normal- und Notfallbetrieb sondern auch das Umschalten vom Normalbetrieb in den Notfallbetrieb durch die Modulsteuereinheit gesteuert. Bevorzugt wird ebenfalls der Gleichspannungszwischenkreis vom externen Spannungsnetz getrennt, wobei diese Trennung auch direkt von den Messeinheiten initiiert werden kann.

In einer weiteren Ausführungsform ist auch das erste Regelsystem dafür vorgesehen, aufgrund des Notfallbetriebssignals den Gleichspannungszwischenkreis vom externen Spannungsnetz zu trennen. Das erste Regelsystem steuert den Energiefluss zu den angeschlossenen externen Spannungsnetzen in der von der Modulsteuereinheit vorgesehenen Weise. Das erste Regelsystem ist dabei in einer weiteren Ausführungsform dazu vorgesehen, bei mehreren angeschlossenen externen Spannungsnetzen nur das ausgefallene externe Spannungsnetz zu trennen. Eine Trennung durch das erste Regelsystem kann in jedem Fall sofort innerhalb weniger Millisekunden erfolgen. Damit werden Schäden am Energiespeichermodul vermieden, was die Ausfallsicherheit des Energiespeichermoduls für die Zukunft verbessert, damit dieses weiterhin auch für eventuell andere weiterhin angeschlossene externe Spannungsnetze und für den interne Stützbetrieb des internen Versorgungsnetzes betriebsbereit bleibt. Ansonsten würde gegebenenfalls ein Kurzschluss oder eine Überlastsituation eintreten. In einer weiteren Ausführungsform umfasst das Regelsystem dazu eine Regelbox mit mindestens einem Regelglied und einen oder mehrere Trennschalter, die durch das Regelglied gesteuert werden und deren Anzahl von der Anzahl der an die Regeleinheit angeschlossenen externen Spannungsnetze abhängt. Die Regelbox ist dabei direkt oder über das Regelsystem mit der Modulsteuereinheit und/oder mit der Messeinheit über eine Datenleitung verbunden, über die die Modulsteuereinheit Konfigurationsdaten der Regelfunktion an das Regelglied übertragen kann. Dabei kann das zweite Regelsystem alternativ oder zusätzlich zum ersten Regelsystem zur Trennung des internen Versorgungsnetzes vom externen Stromnetz aufgrund des Notfallbetriebssignals vorgesehen sein. Dadurch kann in einer gemeinsamen Komponente sowohl die Trennung vom externen Stromnetz als auch die Verbindung des Gleichspannungszwischenkreises mit dem internen Versorgungsnetz durchgeführt werden. Dadurch kann eine weitere Steuerkommunikation über die Modulsteuereinheit vermieden werden und es können sofort aufgrund des Notfallbetriebssignals in dem zweiten Regelsystem beide Vorgänge ausgeführt werden, wozu die entsprechenden Schalter des zweiten Regelsystems vorzugsweise bereits hardwaremäßig dazu miteinander verbunden sind. Eine Trennung des externen Spannungsnetzes und die Zuschaltung des Gleichspannungszwischenkreises für den Stützbetrieb des internen Versorgungsnetzes kann dadurch innerhalb weniger Millisekunden erreicht werden, wodurch eine Spannungsschwankung im Versorgungsnetz und dadurch auch ein eventueller Ausfall der Betriebsaggregate vermieden wird. In einer weiteren Ausführungsform umfasst das zweite Regelsystem dazu eine Regelbox mit mindestens einem Regelglied und einen oder mehrere Trennschalter, die durch das Regelglied gesteuert werden und deren Anzahl von der Anzahl der an die Regeleinheit angeschlossenen Spannungsnetze abhängt. Die Regelbox kann dabei direkt oder über das zweite Regelsystem mit der Modulsteuereinheit und/oder mit den Messeinheiten über eine Datenleitung verbunden sein, über die die Messeinheiten und/oder die Modulsteuereinheit Konfigurationsdaten der Regelfunktion an das Regelglied übertragen kann.

In einer weiteren Ausführungsform sind die Messeinheiten dazu ausgestaltet, bei einer Wiederverfügbarkeit des externen Spanungsnetzes ein Normalbetriebssignal innerhalb des Energiespeichermoduls auszusenden, bevorzugt direkt an die Modulsteuereinheit. Das Energiespeichermodul, bevorzugt die Modulsteuereinheit, ist dabei dazu vorgesehen, als automatische Reaktion auf das Normalbetriebssignal vom Notfallbetrieb in den Normalbetrieb zu wechseln, wobei der Gleichspannungszwischenkreis und das interne Versorgungsnetz wieder mit dem oder den externen Spannungsnetzen verbunden werden. Somit wird automatisch die normale Stromversorgung hergestellt, so dass verhindert wird, dass das Energiespeichermodul trotz vorhanden externen Stromnetzes im Notfallbetrieb verharrt und leer läuft.

In einer weiteren Ausführungsform ist die Modulsteuereinheit dazu ausgestaltet, eine Steuerung der Betriebsaggregate auf interne Betriebsdaten hin anzupassen. Vorzugsweise umfassen die internen Betriebsdaten dabei thermische Lasten innerhalb des Energiespeichermoduls wie von den Schwungradspeichereinheiten oder von weiteren Betriebsaggregaten wie beispielsweise Vakuumsystem, ein Heiz- oder Kühlsystem oder andere Versorgungssysteme. Damit wird der Wirkungsgrad des Energiespeichermoduls erhöht. Die internen elektrischen Verluste können durch die gezielte Beeinflussung des Betriebsverhaltens oder des Betriebspunktes der Betriebsaggregate in Abhängigkeit anlageninterner oder externer aktueller Messgrößen minimiert werden. Beispielsweise kann die Vorlauftemperatur einer Kältemaschine als ein Beispiel eines Betriebsaggregats erhöht oder gesenkt werden, je nach aktuellen internen/ externen Lasten. Dies ist gerade im Notfallbetrieb von Vorteil, wo mit der vorhandenen Energie im Energiespeichermodul besonders effektiv verfahren werden sollte, um auch lange Ausfälle des externen Stromnetzes überbrücken zu können. Beispielsweise kann eine reduzierte Abwärme der Schwungradspeichereinheiten zu einer Reduzierung der Kälteleistung der Kältemaschine genutzt werden, was Betriebsenergie für die Kältemaschine einspart. In einem anderen Beispiel kann die Leistung einer Vakuumpumpe zur Erzeugung eines Betriebsvakuums in den Schwungradenergiespeichern in Abhängigkeit des Innendrucks der Energiespeicher getaktet betrieben oder gar ganz abgeschaltet werden. Derartige Maßnahmen sparen Betriebsenergie, erhöhen damit den Wirkungsgrad in Normalbetrieb und die mögliche Dauer eines Stützbetriebs des internen Versorgungsnetzes bei vorgegebenem Ladezustand der Schwungradenergiespeicher und ermöglichen damit die Bereitstellung eines effektiveren und ausfallsicheren Energiespeichermoduls.

In einer weiteren Ausführungsform umfasst das Energiespeichermodul zusätzlich ein oder mehrere mit den Betriebsaggregaten verbundene Leistungssenken. Damit wird eine weitere Aufnahme von zusätzlicher Energie bei vollgeladenen Schwungradspeichereinheiten ermöglicht. Beispielsweise kann die Kapazität des Energiespeichermoduls zur Aufnahme externer elektrischer Leistung (beispielsweise Primär- oder Sekundärregelleistung aus einem der Wechselspannungsnetze) durch gezielte Nutzung einer Kühlanlage mit primärem und sekundärem Kühlkreislauf dadurch erhöht werden, dass der sekundäre Kühlkreislauf der Kühlanlage gleichzeitig durch den primären Kreislauf gekühlt und elektrisch geheizt wird, beispielsweise mit einem Tauchsieder im Vorratsbehälter als erste Leistungssenke, was eine erhöhte Kühlleistung des Primärkühlkreislaufs zur Folge hat (erhöhte Leistungsaufnahme der Kältemaschine als zweite Leistungssenke). Die Erhöhung der Modulspeicherkapazität über die nominelle Summe der Einheitenspeicherkapazitäten der einzelnen Schwungradspeichereinheiten hinaus kann je nach Umweltbedingungen oder Anlagenbetriebspunkt durch die (elektrische) Leistungsaufnahme von Kühlsystem und/oder Vakuumsystem bewusst über das für einen Normalbetrieb notwendige Maß erhöht werden, damit für den Notfallbetrieb eine vergrößerte Menge an Energie zur Verfügung steht, um noch längere Ausfälle des externen Spannungsnetzes ohne Probleme mittels Stützbetriebs des Versorgungsnetzen überbrücken zu können. Eine derart vorgehaltene Kältemenge beziehungsweise das zusätzlich erreichte Vakuumlevel unterhalb eines Sollvakuums kann zu einem späteren Zeitpunkt mittels nicht betriebener Betriebsaggregate und der damit verbundenen Einsparung von Betriebsenergie abgerufen und somit eingespart werden, wenn erhöhter oder verlängerter Bedarf gefordert ist.

Das erfindungsgemäße Energiespeichermodul stellt damit einen an beliebigen Orten variabel und mit geringem Aufwand schnell einsetzbaren Energiespeicher dar. In einer Ausführungsform ist das Energiespeichermodul als mobile Einheit in einem transportablen Container ausgebildet. Das Energiespeichermodul ist dabei dazu ausgestaltet, über das erste Regelsystem an ein externes Spannungsnetz (lokales oder nicht-lokales Netz) oder bei einer geeigneten Ausgestaltung des ersten Regelsystems auch an mehrere externe Spannungsnetze, beispielsweise ein oder mehrere lokale Netze und/oder nicht-lokales Netze, angeschlossen zu werden. Die Abgabe von Energie in das oder die externen Spannungsnetze oder die Aufnahme von Energie aus dem oder den externen Spannungsnetzen erfolgt aufgrund der Drehmomentvorgaben durch die Modulsteuereinheit, die wiederum Steuervorgaben von extern erhalten kann. Solche Steueraufgaben können beispielsweise in den angeschlossenen externen Spannungsnetzen auszuführende Regel- und Systemaufgaben sein, auf denen dann die Drehmomentvorgaben basieren. Die Regel- und Systemaufgaben teilen sich dabei auf in ortsgebundene Regel und Systemaufgaben für lokale Spannungsnetze und in nicht-ortsgebundene Regel- und Systemaufgaben in nicht-lokalen Spannungsnetzen. Hierbei kann das Energiespeichermodul zur Ausführung der nicht-ortsgebundenen und ortsgebundene Regel und Systemaufgaben entweder direkt mit einem nicht-lokalen Spannungsnetz und einem oder mehreren lokalen Spannungsnetzen verbunden sein oder über ein angeschlossenes lokales Spannungsnetz indirekt mit einem nicht-lokalen Spannungsnetz verbunden sein, sofern das lokale Spannungsnetz selber mit dem nicht-lokalen Spannungsnetz verbunden ist.

Die Modulsteuereinheit ermöglicht es, dass das Energiespeichermodul unterschiedliche Regel- und Systemaufgaben in gegebenenfalls separat angeschlossenen lokalen und nicht-lokalen Spannungsnetzen ausführen kann und damit eine gleichzeitige Verbesserung von lokaler Netzqualität in den lokalen Spannungsnetzen und Versorgungssicherheit in nicht-lokalen Spannungsnetzen bewirken kann. Ortsgebundene Regel- und Systemaufgaben beziehen sich dabei auf lokale Spannungsnetze (beispielsweise lokale Wechselspannungsnetze) und sind beispielsweise die Sicherstellung der benötigten Netzspannung, die Blindleistungskompensation durch Regelung der Amplituden- und Phasenlage des Spannungssignals, das Bereitstellen einer lokalen Leistungsreserve für sich eventuell hinzuschaltende größere Stromabnehmer oder Einschaltstromspitzen und das Speichern von lokalen Energieüberschussmengen. Nicht-ortsgebundene Regel- und Systemaufgaben beziehen sich dabei auf nicht-lokale Spannungsnetze (nicht-lokale Wechselspannungsnetze) und sind beispielsweise die Bereitstellung von primärer oder sekundärer Regelleistung. Die Regelleistung (auch Reserveleistung) gewährleistet die Netzstabilität bei unvorhergesehenen Ereignissen im Spannungsnetz. Dazu können kurzfristig Leistungsanpassungen bei regelfähigen Kraftwerken durchgeführt und schnell anlaufende Kraftwerke oder Energiespeicher wie das erfindungsgemäße Energiespeichermodul eingesetzt werden. Weitere nicht-ortsgebundene Regel- und Systemaufgaben sind außerdem die Schwarzstartunterstützung im Falle eines Netzausfalls, die allgemeine Speicherung von Leistungsspitzen und die Blindleistungskompensation im nicht-lokalen Spannungsnetz. Weitere ortsgebundene und nicht-ortsgebundene Regel- und Systemaufgaben für lokale und nicht-lokale Spannungsnetze sind die Bereitstellung von Redundanzen (Ausfallsicherheit) bei der Stromversorgung in Kombination mit den bereits vorhandenen Energielieferanten und ein Blindleistungsmanagement.

Hierbei bezeichnet das nicht-lokale Spannungsnetz beispielsweise ein Wechselspannungsnetz, das sich überregional über sehr große Gebiete erstreckt und in dem die nicht-ortsgebundenen Regel- und Systemaufgaben durchgeführt werden. Nicht-lokale Spannungsnetze sind beispielsweise Übertragungs- oder Verteilnetze (öffentliches Stromnetz). Das öffentliche Spannungsnetz (Stromnetz) in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. Darunter befinden sich regionale Verteilnetze. In anderen Ländern werden entsprechende Übertragungsnetze durch andere Netzbetreiber betrieben. In den Übertragungsnetzen wird die Frequenz des Spanungsnetzes stabil gehalten (Frequenzregulierung). Das übergeordnete europäische Verbundnetz aus den jeweiligen Übertragungsnetzen in den einzelnen Staaten ist ebenfalls als nicht-lokales Spannungsnetz anzusehen, wofür allerdings derzeit nur die Standards für die Regelenergie festgelegt sind. Die nicht-ortsgebundenen Regel- und Systemaufgaben werden in den jeweiligen Übertragungsnetzen durchgeführt. Als lokales Spannungsnetz im Sinne der Erfindung wird beispielsweise auch ein Wechselspannungsnetz bezeichnet, in dem die voranstehend beschriebenen ortsgebundenen Regel- und Systemaufgaben durchgeführt werden. Lokale Spannungsnetze sind in der Regel räumlich begrenzt, beispielsweise ein betriebsinternes Spannungsnetz auf einer Betriebsanlage oder ein Spannungsnetz innerhalb eines Hauses oder Gebäudekomplexes.

Die Modulsteuereinheit ist eine Komponente in dem Energiespeichermodul, die das Energiespeichermodul steuert, d.h., die die gewünschten Betriebszustände (beispielsweise Normalbetrieb oder Notfallbetrieb) und Betriebsparameter einstellt und die das Energiespeichermodul entsprechend eines Betriebsplans, der die gewünschten Betriebszustände als Funktion der Zeit enthält, steuert. Dem Betriebsplan liegen die ortsgebundenen und nicht-ortsgebundenen Regel- und Systemaufgaben (Steueranweisungen) zugrunde. Die Modulsteuereinheit ist für die Steuerung des Energiespeichermoduls mit den jeweiligen Komponenten im Energiespeichermodul, umfassend die ersten und zweiten Regelsysteme und die Schwungradspeichereinheiten, über geeignete Datenleitungen, beispielsweise ein Datenbussystem wie beispielsweise ein Canbus, ein Profibus oder als Ethernet, verbunden.

Die Erfindung bezieht sich des Weiteren auf ein Verfahren zum Steuern eines erfindungsgemäßen Energiespeichermoduls umfassend die Schritte
- Abgeben oder Aufnehmen von Energie aus einem gemeinsamen innerhalb des Energiespeichermoduls angeordneten Gleichspannungszwischenkreis, an den mehrere Schwungradspeichereinheiten elektrisch parallel angeschlossen sind, an/von ein oder mehreren außerhalb des Energiespeichermoduls angeordneten externen Spannungsnetze, die über ein erstes Regelsystem des Energiespeichermoduls mit dem Gleichspannungszwischenkreis verbunden sind, und
- Versorgen der ein oder mehreren zum Betrieb der Schwungradspeichereinheiten benötigten Betriebsaggregate über ein internes Versorgungsnetz des Energiespeichermoduls, an das alle strombetriebenen Betriebsaggregate der Schwungradspeichereinheiten angeschlossen sind und das im Normalbetrieb direkt oder indirekt über den Gleichspannungszwischenkreis mit dem externen Spannungsnetze zur Energieversorgung der Betriebsaggregate verbunden ist, mit der zum Betrieb der Betriebsaggregate notwendigen Energie während eines Normalbetriebs des Energiespeichermoduls, wobei das interne Versorgungsnetz mit einer Ausgangsseite eines zweiten Regelsystems verbunden ist, dessen Eingangsseite zumindest mit dem Gleichspannungszwischenkreis verbunden ist und
- Umschalten des Energiespeichermoduls von Normalbetrieb auf einen Notfallbetrieb bei fehlendem externen Spannungsnetz, und
- Versorgen des internen Versorgungsnetzes mit der zum fortgeführten Betrieb der Schwungradspeichereinheiten erforderlichen Versorgungsleistung bei fehlendem externem Stromnetz alleine aus dem Gleichspannungszwischenkreis zumindest in einem ersten Zeitintervall.

In einer Ausführungsform umfasst das Verfahren den weiteren Schritt des
- Regelns der Versorgungsnetzspannung des internen Versorgungsnetzes auf einen konstanten Wert durch bedarfsgerechte Stromlieferung aus dem Gleichstromzwischenkreis durch das zweite Regelsystem.

Dieser konstante Wert entspricht der Sollspannung im internen Versorgungsnetz abzüglich einer Regeldifferenz.

In einer weiteren Ausführungsform umfasst das Verfahren die weiteren Schritte
- kontinuierliches Überwachen der Gleichspannung des Gleichspannungszwischenkreis, vorzugsweise mittels mindestens einer Messeinrichtung angeordnet im Gleichspannungszwischenkreis, und
- Steuern der Schwungradspeichereinheiten unabhängig von einer
Modulsteuereinheit zur Steuerung der Schwungradspeichereinheiten für den Normalbetrieb im Notfallbetrieb mittels jeweiliger Motorregelungen in den einzelnen Schwungradspeichereinheiten auf Basis der überwachten Gleichspannung, so dass über Energieabgabe aus den jeweiligen Schwungradspeichereinheiten in den Gleichspannungszwischenkreis dessen Gleichspannung nicht unter einen unteren Schwellenwert absinkt, zumindest solange die in den Schwungradspeichereinheiten gespeichert Menge an Energie nicht unter eine Mindestenergie absinkt, vorzugsweise mittel Vorgabe zeitbezogener Drehmomentvorgaben für die jeweiligen Schwungradspeichereinheiten.

Bei Erreichen oder Unterschreiten der Mindestenergie des Energiespeichermoduls (beispielsweise bei einer über viele Tage nicht vorhandenem externen Spannungsnetz) wird die Restenergie für ein geordnetes Herunterfahren und Abschalten des Energiespeichermoduls verwendet.

In einer Ausführungsform umfasst das Verfahren den weiteren Schritt des
- Durchführen eines gemeinsam koordinierten Stützbetriebs aller Schwungradspeichereinheit durch die Motorregelungen zur Regelung der Gleichspannung im Gleichspannungszwischenkreis auf einen konstanten Wert im Notfallbetrieb, indem die Motorregelungen jeweils Schwungradsteuerungen umfassen und die einzelnen Motorregelungen der Schwungradspeichereinheiten unabhängig von der Modulsteuerung miteinander verbunden sind.

Hierbei kann in einer bevorzugten Ausführungsform zusätzlich ein gezieltes Ausschließen einzelner Schwungradspeichereinheiten des

Energiespeichermoduls von dem gemeinsamen Stützbetrieb zur Bereitstellung einer Mindestmenge an Energie für einen kontrollierten Ablauf der Schwungradspeichereinheiten vorgenommen werden. Die in den vom Stützbetrieb ausgeschlossenen Schwungradspeichereinheiten gespeicherte Energiemenge wird dafür reserviert, gegebenenfalls für den kontrollierten Ablauf und Stopp der Gesamtheit aller Schwungradspeichereinheiten verwendet zu werden, um die Gesamtanlage bei längerem Netzausfall in einen sicheren Stopp-Modus zu überführen.

In einer Ausführungsform umfasst das Verfahren den weiteren Schritt des
- Trennens des internen Versorgungsnetzes vom Gleichspannungszwischenkreis mittels des zweiten Regelsystems, sobald die in den Schwungradspeichereinheiten gespeicherte Menge an Energie unter eine Mindestenergie absinkt.

In einer weiteren Ausführungsform umfasst das Verfahren die weiteren Schritte
- kontinuierliches Messen der Spannungsqualität in den mit dem Energiespeichermodul verbundenen externen Spannungsnetze durch ein oder mehrere Messeinheiten des Energiespeichermoduls,
- Aussenden eines Notfallbetriebssignals innerhalb des Energiespeichermoduls durch mindestens eine Messeinheit bei einer Über- oder Unterspannung in zumindest einem angeschlossenen externen Spanungsnetze,
- Trennen des oder der externen Spannungsnetze zumindest vom Gleichspannungszwischenkreis durch das erste Regelsystem,
- Wechseln der Schwungradspeichereinheiten vom Normalbetrieb in den Notfallbetrieb und Versorgen des internen Versorgungsnetz mit der erforderlichen Versorgungsnetzspannung durch das zweite Regelsystem aus dem Gleichspannungszwischenkreis als automatische Reaktion auf ein Abfallen (Absinken) der Gleichspannung im Gleichspannungszwischenkreis oder als automatische Reaktion aufgrund des Notfallbetriebssignals,
- Aussenden eines Normalbetriebssignals durch die Messeinheiten bei einer Wiederverfügbarkeit des externen Spanungsnetzes, und
- Wechseln vom Notfallbetrieb in den Normalbetrieb des Energiespeichermoduls, und
- Verbinden des internen Versorgungsnetzes mit dem oder den externen Spannungsnetzen, vorzugsweise durch das zweite Regelsystem, als automatische Reaktion aufgrund des Normalbetriebssignals.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Energiespeichermoduls;
- Fig.2:: eine Ausführungsform des ersten Regelsystems mit Regelbox;
- Fig.3:: eine Ausführungsform des zweiten Regelsystems mit Regelbox
- Fig.4:: eine Ausführungsform des erfindungsgemäßen Verfahrens zum Betreiben des Energiespeichermoduls im Normalbetrieb;
- Fig.5:: eine weitere Ausführungsform des erfindungsgemäßen Verfahrens zum Betreiben des Energiespeichermoduls im Notfallbetrieb;

### Detaillierte Beschreibung der Ausführungsbeispiele

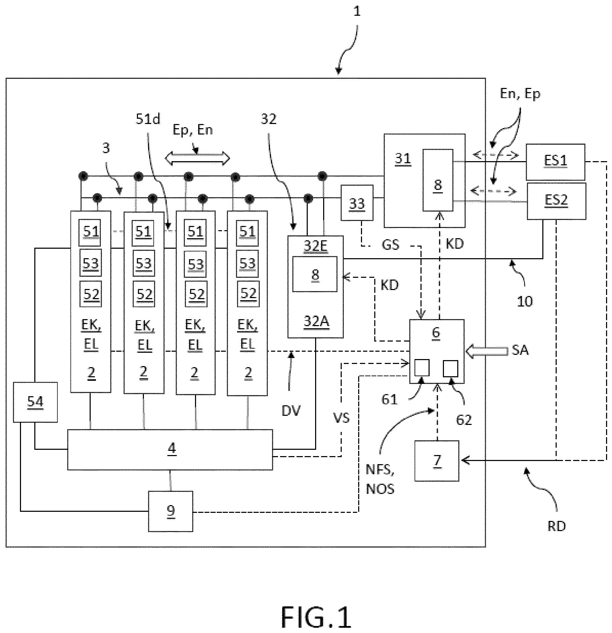

Fig. 1 zeigt eine Ausführungsform des erfindungsgemäßen Energiespeichermoduls 1 zur reversiblen Speicherung von elektrischer Energie in Form von mechanischer Rotationsenergie, das hier vier Schwungradspeichereinheiten 2 mit jeweiligen Einheitenspeicherkapazitäten und Einheitenleistungen umfasst. Diese geringe Anzahl wurde aus Übersichtsgründen in der schematischen Darstellung gewählt. Für die reale Anwendung umfasst ein Energiespeichermodul beispielsweise dreißig Schwungradspeichereinheiten 2. In dieser Auslegungsform würden sich mit den oben aufgeführten Einzelkapazitäten pro Schwungradenergiespeicher eine maximale Speicherkapazität von 150 kWh und eine maximale Leistung von 0,6 MW pro Energiespeichermodul ergeben. Jede der Schwungradspeichereinheiten 2 umfasst einen elektromagnetischen Wandler 53, der elektrisch über eine Motorregelung 51, vorzugsweise einen Frequenzumrichter 51, an den Gleichspannungszwischenkreis 3 angeschlossen ist. Der Gleichspannungszwischenkreis 3 dient dazu, dass alle Schwungradspeichereinheiten 2 elektrisch parallel zueinander angeschlossen werden können, damit sich die Einheitenspeicherkapazitäten EK und Einheitenleistungen EL zu einer Gesamt-Modulspeicherkapazität und Gesamt-Modulleistung aufaddieren können und eine fehlerhafte Schwungradspeichereinheit nicht die Funktionstüchtigkeit des gesamten Energiespeichermoduls 1 in Frage stellt. Der Gleichspannungszwischenkreis ist über ein erstes Regelsystem 31 mit zwei externen Spannungsnetzen ES1, ES2 verbunden. Die Modulsteuereinheit 6 steuert das Energiespeichermodul 1 durch Drehmomentvorgaben DV (vorzugsweise zeitbezogene Drehmomentvorgaben), die die Modulsteuereinheit 6 generiert und an die Schwungradspeichereinheiten 2 beim Betrieb des Energiespeichermoduls 1 übermittelt. Aufgrund der Drehmomentvorgaben DV speisen die Schwungradspeichereinheiten 2 Energie in Form von Strom in den Gleichspannungszwischenkreis 3 ein oder entnehmen Energie in Form von Strom aus dem Gleichspannungszwischenkreis 3. Hierbei regelt im Normalbetrieb NO das Regelsystem 31 die Gleichspannung DC im Gleichspannungszwischenkreis 3 durch Abgabe (Ep) von Energie in zumindest eines der beiden externen Spannungsnetze ES1, ES2 oder durch Aufnahme En von Energie aus zumindest einem der beiden externen Spannungsnetze ES1, ES2 zwischen einem oberen Schwellwert SW1 (beispielsweise Soll-Gleichspannung + 5 V) und einem unteren Schwellwert SW2 (beispielsweise Soll-Gleichspannung -5 V) so, dass die Gleichspannung GS im Wesentlichen konstant auf einem Wert von beispielsweise 750 V bleibt. Außerdem ist neben dem ersten Regelsystem 31, das die Gleichspannung GS im Gleichspannungszwischenkreis 3 zwischen den oberen und unteren Schwellwerten SW1, SW2 konstant hält, ein zweites Regelsystem 32 mit dem Gleichspannungszwischenkreis 3 auf dessen Eingangsseite 32E verbunden. In einer Ausführungsform kann die Eingangsseite 32E zusätzlich mit dem Spannungsnetz ES2 zur Versorgung des internen Versorgungsnetzes 4 im Normalbetrieb NO verbunden sein. Ohne diese Verbindung wird das Versorgungsnetz 4 indirekt über das erste Regelsystem 31, den Gleichspannungszwischenkreis 3 und das zweite Regelsystem 32 mit Energie versorgt. In Notfallbetrieb NO ohne externe Spannungsnetze ES1, ES2 führt das zweite Regelsystem 32 einen Inselbetrieb (alleinige Versorgung des internen Versorgungsnetzes 4 aus dem Schwungradspeichereinheiten 2 über den Gleichspannungszwischenkreis 3) durch. Dies bietet den Vorteil, dass das Energiespeichermodul 1 für den Zeitpunkt der Wiederverfügbarkeit des oder der externen Spannungsnetze ES1, ES2 mit niedrigem modul-internem Aufwand betriebsbereit bleibt. Solange das interne Versorgungsnetz 4 aus dem Gleichspannungszwischenkreis 3 gespeist wird, bleiben die Regel- und Systemaufgaben mangels Verbindung zu den externen Spannungsnetzen ES1, ES2 unbearbeitet. Sofern beim Fehlen des externen Spannungsnetzes ES2 das erste Regelsystem 31 mit einem weiteren weiterhin funktionierenden externen Spannungsnetz ES1 verbunden bleibt, kann das interne Versorgungsnetz 4 auch aus dem externen Spannungsnetz ES1 über den Gleichspannungszwischenkreis, der über das erste Regelsystem 31 aus dem externen Spannungsnetz ES1 gespeist wird, und über das zweite Regelsystem 32 versorgt werden. Das erste Regelsystem 31 und die Modulsteuereinheit 6 sind auch für die Ausführung dieses Betriebszustands ausgebildet. Für die Steuerung der Schwungradspeichereinheiten 2 ruft die Modulsteuereinheit 6 die Drehzahlen der einzelnen Schwungradspeichereinheiten 2 aus deren Motorregelungen 51 ab und bestimmt einen jeweiligen aktuellen Ladezustand der einzelnen Schwungradspeichereinheiten 2 aus der abgerufenen Drehzahl. Aus Maschinenschutzgründen sind in den jeweiligen Motorregelungen 51 der Schwungradspeichereinheiten 2 eine obere Drehzahlbegrenzung und/oder eine untere Drehzahlbegrenzung als spezielles Bauteil 52 hardwaremäßig (Sensor und Regelung) implementiert. Die Drehzahlbegrenzungen können alternativ oder zusätzlich auch in der Modulsteuereinheit 6, vorzugsweise in einem in der Modulsteuereinheit 6 ausgeführten Computerprogramm, implementiert sein. Die untere Drehzahlgrenze ist minimal 0 Umdrehungen/s, wobei es technisch sinnvoll sein kann, eine höhere Minimaldrehzahl zu wählen, damit das Motorsystem eine aus betriebstechnischen Gründen notwendige Mindestleistung liefern kann. Nach oben hin ist die Drehzahl entweder durch die Motorumrichterfrequenz oder durch die Festigkeiten der Rotorbauteile begrenzt. Typisch sind Maximaldrehzahlen von zum Bespiel 800Hz.

Die Modulsteuereinheit 6 steuert das Energiespeichermodul 1 im Normalbetrieb NO basierend auf externen Steueranweisungen SA (Regel- und Systemaufgaben), die für die jeweiligen externen Wechselspannungsnetzen ES1, ES2 ausgeführt werden. Die Regel- und Systemaufgaben SA empfängt die Modulsteuereinheit 6 in Form von externen Daten über eine geeignete Datenschnittstelle (hier nicht explizit gezeigt) von einer Netzsteuereinrichtung außerhalb des Energiespeichermoduls. Die an die Schwungradspeichereinheiten 2 zu übermittelnden Drehmomentvorgaben DV werden auf Basis der empfangenen externen Daten von der Modulsteuereinheit 6 generiert. Externe Daten sind beispielsweise physikalische Messgrößen, logische Größen, Echtzeit-Steuerkommandos oder Steuerkommandos zur Ablaufsteuerung. Die Modulsteuereinheit 6 umfasst des Weiteren in einer Ausführungsform einen Speicher 61 zur Speicherung der externen Daten, insbesondere der Regel- und Systemaufgaben SA. Außerdem umfasst die Modulsteuereinheit 6 in einer weiteren Ausführungsform ein Prioritätsmanagement 62 für die Ausführung der Steueranweisungen. Zur Steuerung des Energiespeichermoduls 1 erstellt die Modulsteuereinheit 6 einen Betriebsplan zur Ausführung Regel- und Systemaufgaben SA in den angeschlossenen externen Spannungsnetzen ES1, ES2 und übermittelt entsprechende Drehmomentvorgaben DV an die jeweiligen Schwungradspeichereinheiten 2, bevorzugt sind die Drehmomentvorgaben DV individuell auf die jeweiligen Ladezustände der einzelnen Schwungradspeichereinheiten 2 angepasst. Damit die Modulsteuereinheit 6 immer aktuelle externe Daten zur Steuerung des Energiespeichermoduls 1 erhält, prüft die Modulsteuereinheit 6 in einer Ausführungsform die bestehende Kommunikationsverbindung nach extern auf ihre Funktionstüchtigkeit mittels Aussenden eines Testsignals, aufgrund dessen ein externes System ein entsprechendes Rücksignal zurücksendet. Der Empfang des Rücksignals belegt die Funktionstüchtigkeit der Kommunikationsverbindung zu diesem externen System, von dem das Energiespeichermodul beispielsweise seine auszuführenden Regel- und Systemaufgaben SA als externe Daten erhält. Damit diese externen Daten den aktuellen Zustand des Energiespeichermoduls 1 berücksichtigen, sendet die Modulsteuereinheit 6 in einer Ausführungsform die Betriebsdaten des Energiespeichermoduls 1 beispielsweise periodisch an das externe System. Die Betriebsdaten können dabei die Ladezustände der Schwungradspeichereinheiten 2 und damit die momentane und die im Prinzip verfügbare Modulspeicherkapazität und Modulleistung, die Identität des Energiespeichermoduls 1 oder auch den Zustand anderer Komponenten des Energiespeichermoduls 1 umfassen.

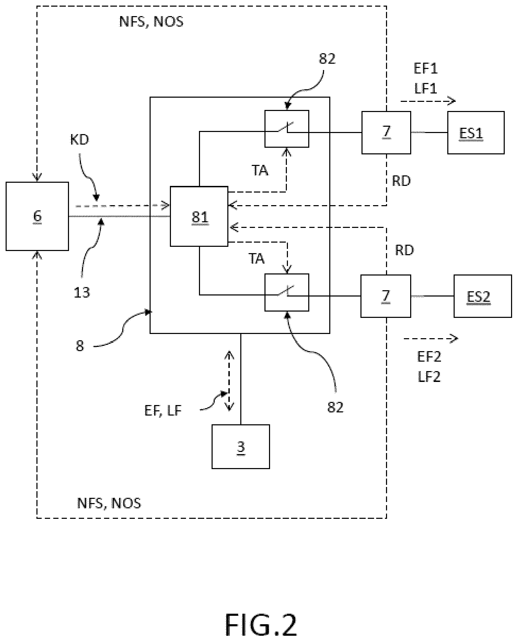

Damit der Energie- und Leistungsfluss der in oder aus dem Gleichspannungszwischenkreis 3 zu/von den Wechselstromnetzen ES1, ES2 fließt, für die jeweiligen Wechselstromnetzen ES1, ES2 geeignet zur Erfüllung der jeweiligen Regel- und Systemaufgaben SA aufgeteilt werden kann, umfasst das Energiespeichermodul 1 eine Regelbox 8 (siehe dazu auch Fig.2), die den aus dem Gleichstromzwischenkreis 3 eingehenden gesamten Energie- und Leistungsfluss in einen Energie- und Leistungsfluss EF1, LF1 für das Wechselspannungsnetz ES1 und in einen Energie- und Leistungsfluss EF2, LF2 für das Wechselspannungsnetz ES2 aufteilt. Zur optimalen Ausführung der Regel- und Systemaufgaben SA in den angeschlossenen Wechselspannungsnetzen ES1, ES2 umfasst das Energiespeichermodul 1 hier eine Messeinheit 7 zur kontinuierlichen Messung der Spannungsqualität und/oder der Stromstärke für die beiden Wechselspannungsnetze ES1, ES2, die die relevanten Daten RD zur Beurteilung der Spannungsqualität und der Stromstärke in den Wechselspannungsnetzen ES1, ES2 misst. In anderen Ausführungsformen können auch mehrere Messeinheiten 7 verwendet werden. Die Messeinheit(en) 7 ist/sind dazu ausgestaltet, zumindest bei einer Über- oder Unterspannung in dem an das interne Versorgungsnetz 4 angeschlossene externe Spanungsnetz ES2 ein Notfallbetriebssignal NFS innerhalb des Energiespeichermodul 1, hier zur Modulsteuereinheit 6, auszusenden. Das Energiespeichermodul 1, insbesondere das zweite Regelsystem, ist dabei dazu vorgesehen, als automatische Reaktion auf das Notfallbetriebssignal NFS vom Normalbetrieb NO in den Notfallbetrieb NF zu wechseln und das interne Versorgungsnetz 4 und den Gleichspannungszwischenkreis 3 vom externen Spannungsnetz ES2 oder von allen externen Spannungsnetzen ES1, ES2 zu trennen, wobei das zweite Regelsystem 32 dafür vorgesehen ist, aufgrund des Notfallbetriebssignals NFS das interne Versorgungsnetz 4 mit der erforderlichen Versorgungsnetzspannung VS aus dem Gleichspannungszwischenkreis 3 zu versorgen. Damit im Notfallbetrieb NF das zweite Regelsystem 32 die Versorgungsnetzspannung VS im internen Versorgungsnetz 4 durch bedarfsgerechte Stromlieferung aus dem Gleichspannungszwischenkreis 3 im Wesentlichen konstant regeln kann, kann die Versorgungsnetzspannung VS beispielsweise kontinuierlich im Versorgungsnetz 4 mit geeigneten Mitteln gemessen und die Werte der Versorgungsnetzspannung an die Modulsteuereinheit 6 übermittelt werden. Die Messeinheiten 7 sind ferner dazu ausgestaltet, bei einer Wiederverfügbarkeit des externen Spanungsnetzes ES1, ES2 ein Normalbetriebssignal NOS innerhalb des Energiespeichermoduls 1 auszusenden, wobei das Energiespeichermodul 1, hier beispielsweise mittels der Modulsteuereinheit 6, als automatische Reaktion auf das Normalbetriebssignal NOS vom Notfallbetrieb NF in den Normalbetrieb NO zu wechseln und den Gleichspannungszwischenkreis 3 und das interne Versorgungsnetz 4 wieder mit dem oder den externen Spannungsnetzen ES1, ES2 zu verbinden und gegebenenfalls mittels des zweiten Regelsystems 32 die elektrische Verbindung zwischen Gleichspannungskreis 3 und internem Versorgungsnetz 4 zu trennen. In einer Ausführungsform können die externen Spannungsnetze ES1 und ES2 auch ein gemeinsames miteinander verbundenes externes Spannungsnetz sein.

Geeignete Messgrößen zum Erhalt der relevanten Daten RD sind beispielsweise der Spannungsverlauf als Funktion der Zeit, der Phasenwinkel, der Sternpunkt, die Netzfrequenz, oder der Netzstrom. Der Fachmann kann im Rahmen der vorliegenden Erfindung geeignete Messeinheiten oder Messsonden auswählen und an der geeigneten Position anordnen. Das Energiespeichermodul 1 kann somit beim Überschreiten festgelegter Grenzwerte in dem oder den Wechselspannungsnetzen ES1, ES2 aktiv den Anschluss an ein Wechselspannungsnetz ES1, ES2 trennen.

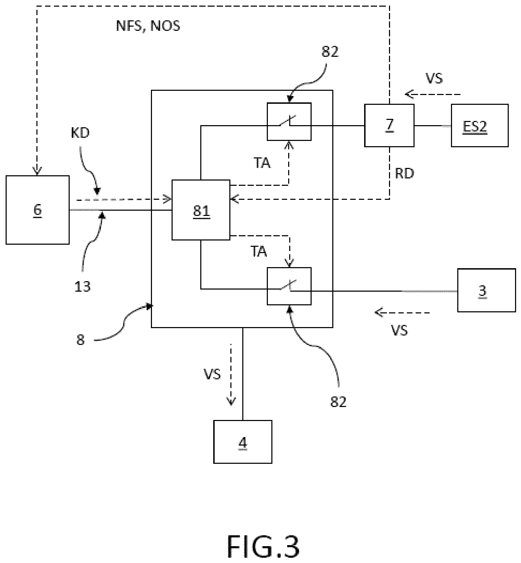

Zum Betrieb der Schwungradspeichereinheiten 2 sind alle strombetriebene Betriebsaggregate 51, 52, 53, 54 an ein internes Versorgungsnetz 4 angeschlossen, das im Normalbetrieb NO direkt oder indirekt (über den Gleichspannungszwischenkreis) mit dem externen Spannungsnetze ES2 zur Energieversorgung der Betriebsaggregate 51, 52, 53, 54 verbunden ist. In dieser Ausführungsform ist die optionale Verbindung 10 der Eingangsseite 32E des zweiten Regelsystems 32 mit dem externen Spannungsnetz ES2 gestrichelt dargestellt. Die Regelung der an das zweite Regelsystem 32 angeschlossenen elektrischen Verbindungen kann durch eine Regelbox 8 ausgeführt werden, siehe dazu auch Figur 3. Dabei ist das zweite Regelsystem 32 mit dem Gleichspannungszwischenkreis 3 verbunden und dafür vorgesehen, im Notfallbetrieb NF das interne Versorgungsnetz 4 zum fortgeführten Betrieb der Schwungradspeichereinheiten 2 mit einer erforderlichen Versorgungsnetzspannung VS aus den Schwungradspeichereinheiten selbst über den Gleichspannungszwischenkreis 3 zumindest in einem ersten Zeitintervall T zu versorgen.

Die Gleichspannung GS wird im Gleichspannungszwischenkreis 3 kontinuierlich überwacht, wobei die Schwungradspeichereinheiten 2 jeweils Motorregelungen 51 umfassen, die dafür ausgestaltet sind, unabhängig von einer Modulsteuereinheit 6 zur Steuerung der Schwungradspeichereinheiten 2 im Normalbetrieb NO im Notfallbetrieb NF zumindest auf Basis der überwachten Gleichspannung GS die Gleichspannung GS im Gleichspannungszwischenkreis 3 über Energieabgabe Ep aus den jeweiligen Schwungradspeichereinheiten 2 nicht unter einen unteren Schwellenwert SW2 absinken zu lassen, zumindest solange die in den jeweiligen Schwungradspeichereinheiten 2 gespeichert Menge an Energie nicht unter eine Mindestenergie absinkt. Für einen Stützbetrieb des internen Versorgungsnetzes 4 sollte dabei die Gleichspannung GS im Gleichspannungszwischenkreis 3 nicht unter die Spannung im Versorgungsnetz absinken. Im Gleichspannungszwischenkreis 3 kann zudem eine Messeinrichtung 33 zur Messung der Spannung GS im Gleichspannungszwischenkreis 3 angeordnet sein, welche an die Modulsteuereinheit 6 übermittelt wird. Anstatt der Motorregelungen 51 kann in einer Ausführungsform auch die Modulsteuereinheit 6 auf Basis der gemessenen Spannung GS die Schwungradspeichereinheiten 2 so ansteuern, dass über Energieabgabe EFp aus ein oder mehreren Schwungradspeichereinheit 2 in den Gleichspannungszwischenkreis 3 dessen Spannung GS nicht unter einen unteren Schwellenwert SW2 absinkt, zumindest solange die in den Schwungradspeichereinheiten 2 gespeichert Menge an Energie nicht unter eine Mindestenergie ME absinkt.

Für den Normalbetrieb steuert die Modulsteuereinheit 6 auch die Energieaufnahme EFn in ein oder mehreren Schwungradspeichereinheit 2 aus dem Gleichspannungszwischenkreis 3, sofern dessen Spannung GS über einen oberen Schwellenwert SW1 ansteigt. Diese Steuerung erfolgt beispielsweise auf Basis der mittels der Messeinrichtungen 33 gemessenen Spannung GS. Für den Notfallbetrieb NF können in einer Ausführungsform aber die Motorregelungen 51 der einzelnen Schwungradspeichereinheiten 2 unabhängig von der Modulsteuereinheit 6 auch direkt miteinander verbunden sein und jeweils eine Schwungradsteuerung (nicht explizit gezeigt) umfassen, die dafür vorgesehen ist, einen gemeinsam koordinierten Stützbetrieb SB der Gleichspannung GS im Gleichspannungszwischenkreis 3 durch alle Schwungradspeichereinheiten 2 im Notfallbetrieb NF auszuführen. Die direkte Verbindung der Motorregelungen 51 ist durch eine gestrichelte Linie 51d dargestellt.

Neben den Betriebsaggregaten in den Schwungradspeichereinheiten 2 wie beispielsweise die Motorregelung 51 können einige Betriebsaggregate, beispielsweise die Betriebsaggregate 54, auch außerhalb der Schwungradspeichereinheiten 2 angeordnet sein, wie beispielsweise ein Vakuumsystem, das mit den Rotorbehältern für die Rotoren (Schwungmassen) in den Schwungradspeichereinheiten 2 über ein Rohrsystem (hier aus Übersichtsgründen nicht dargestellt) verbunden ist, um in den Rotorbehältern das für ein möglichst verlustarmes Rotieren der Rotoren bei hohen Drehzahlen benötigte Vakuum von zum Beispiel kleiner 10⁻³ mbar bei Drehzahlen von größer 40000U/min zu erzeugen. Ein weiteres Betriebsaggregat 54 kann eine Kühleinheit zur Abfuhr von Betriebswärme aus dem Energiespeichermodul 1 sein. Die Modulsteuereinheit 6 kann dazu ausgestaltet sein, die Steuerung der Betriebsaggregate 54 auf empfangene interne Betriebsdaten oder externe Daten hin anzupassen, daher sind auch die Betriebsaggregate 54 mit der Modulsteuerung 6 über Datenleitungen verbunden. Die internen elektrischen Verluste können durch die gezielte Beeinflussung des Betriebsverhaltens oder des Betriebspunktes der Betriebsaggregate 54 in Abhängigkeit anlageninterner oder externer aktueller Messgrößen minimiert werden. Beispielsweise kann die Vorlauftemperatur einer Kältemaschine 54 als ein Beispiel eines Betriebsaggregats 54 erhöht oder gesenkt werden, je nach aktuellen internen/externen Lasten. Beispielsweise kann eine reduzierte Abwärme der Schwungradspeichereinheiten 2 zu einer Reduzierung der Kälteleistung der Kältemaschine 54 genutzt werden, was Betriebsenergie für die Kältemaschine 54 einspart. In einem anderen Beispiel kann die Leistung einer Vakuumpumpe im Vakuummodul 54 zur Erzeugung eines Betriebsvakuums in den Rotorbehältern für die Rotoren der Schwungradenergiespeicher 2 in Abhängigkeit des Ausgasverhaltens der Schwungmassen (Rotoren) getaktet betrieben oder gar ganz abgeschaltet werden. Derartige Maßnahmen sparen Betriebsenergie und erhöhen damit den temporären Wirkungsgrad um bis zu 10% und ermöglichen damit die Bereitstellung eines effektiveren Energiespeichermoduls 1.

In dieser Ausführungsform umfasst das Energiespeichermodul 1 zusätzlich eine mit einem oder mehreren der Betriebsaggregate 51, 52, 53, 54 verbundene Leistungssenke 9, mit der eine weitere Aufnahme von zusätzlicher Energie bei voll geladenen Schwungradspeichereinheiten 2 ermöglicht wird. Beispielsweise kann die Modulspeicherkapazität des Energiespeichermoduls 1 zur Aufnahme externer elektrischer Leistung (beispielsweise Primär- oder Sekundärregelleistung aus einem der Wechselspannungsnetze ES1, ES2) durch gezielte Nutzung einer Kühlanlage 54 mit primärem und sekundärem Kühlkreislauf dadurch erhöht werden, dass der sekundäre Kühlkreislauf der Kühlanlage 54 elektrisch geheizt wird, beispielsweise mit einem Tauchsieder im Kühlflüssigkeits-Vorratsbehälter mit zum Beispiel 400I Volumen (beispielsweise ein Wasserbehälter) als erste Leistungssenke 9, was eine erhöhte Kühlleistung des Primärkühlkreislaufs zur Folge hat (erhöhte Leistungsaufnahme der Kältemaschine 54 als zweite Leistungssenke). Die Erhöhung der Modulspeicherkapazität über die nominelle Summe der Einheitenspeicherkapazitäten EK der einzelnen Schwungradspeichereinheiten 2 hinaus kann je nach Umweltbedingungen oder Anlagenbetriebspunkt durch die (elektrische) Leistungsaufnahme von Kühlsystem 54 und/oder Vakuumsystem 54 bewusst über das für einen Normalbetrieb notwendige Maß erhöht werden. Die so gespeicherte Kältemenge beziehungsweise das zusätzlich erreichte Vakuumlevel unterhalb eines Sollvakuums von zum Beispiel 10⁻³ mbar kann zu einem späteren Zeitpunkt mittels nicht betriebener Betriebsaggregate 54 und der damit verbundenen Einsparung von Betriebsenergie abgerufen und somit eingespart werden, wenn erhöhter Bedarf gefördert ist.

Zur Steuerung des Energiespeichermoduls 1 sind die Modulsteuereinheit 6 und die einzelnen Komponenten des Energiespeichermoduls 1 über Datenleitungen (in Fig.1 gestrichelt dargestellt), beispielsweise ein Datenbus (CAN-Bus oder Profibus), miteinander verbunden. Über die Datenleitung 13 (siehe Fig. 2 und 3) zu den Regelsystemen 31, 32 überträgt die Modulsteuereinheit 6 die Konfigurationsdaten KD zur Reglerfunktion der Regelbox 8.

Fig. 2 zeigt eine Ausführungsform der Regelbox 8. Damit der Energie- und Leistungsfluss EF, LF zwischen den angeschlossenen Spannungsnetzen (Stromnetzen) ES1, ES2 und der Energiespeicheranlage 1 gemäß den Regel- und Systemaufgaben SA aufteilen werden kann, umfasst das Energiespeichermodul 1 in dieser Ausführungsform eine Regelbox 8 mit einem Regelglied 81 und separate Trennschalter 82 für jedes der angeschlossenen Spannungsnetze (Stromnetze) ES1, ES2. Die Modulsteuereinheit 6 ist über eine Datenverbindung 10 mit dem Regelglied 81 der Regelbox 8 verbunden und übermittelt der Regelbox 8, hier direkt dem Regelglied 81, zur Steuerung der Energie- und Leistungsflüsse entsprechende Konfigurationsdaten der Reglerfunktion KD. Aufgrund der Konfigurationsdaten der Reglerfunktion KD steuert das Regelglied 81 die Verteilung des vom Gleichspannungszwischenkreis 3 eingehenden Energie- und Leistungsflusses EF, LF auf die angeschlossenen Spannungsnetze (Stromnetze) ES1, ES2 als Energie-/Leistungsfluss EF1, LF1 für das Spannungsnetz (lokale Stromnetz) ES1 und als Energie-/Leistungsfluss EF2, LF2 für das nicht-lokale Spannungsnetz (nicht-lokale Stromnetz) ES2. In diesem Ausführungsbeispiel ist lediglich exemplarisch die Verteilung des Energieflusses EF bei Einspeisung von Energie in beide angeschlossene Spannungsnetze (Stromnetze) ES1, ES2 gezeigt. Die Regelbox 8 ist gleichermaßen dafür ausgestaltet, einen Energiefluss aus einem der angeschlossenen Spannungsnetze (unabhängig ob Wechsel- oder Gleichspannungsnetze) ES1, ES2 und einen Energiefluss in das andere angeschlossene Spannungsnetz (Stromnetz) ES1, ES2 zu steuern, wobei je nach Größe der beiden Energieflüsse entweder der negative Energieüberschuss vom Energiespeichermodul 1 gespeichert oder der positive Energieüberschuss vom Energiespeichermodul 1 bereitgestellt wird. Das Energiespeichermodul 1 ist hier nicht explizit gezeigt, sondern nur symbolisch über die entsprechenden Komponenten dargestellt. Die Regelbox 8 empfängt simultan die relevanten Daten RD aus beiden angeschlossenen Spannungsnetzen (Stromnetzen) ES1, ES2 über die jeweiligen Messeinheiten 7, woraus das Regelglied 81 das Vorhandensein der beiden angeschlossenen Spannungsnetze (Stromnetze) ES1, ES2 mittels der in dem Regelglied 81 hinterlegten Kriterien oder Schwellwerte für die relevanten Daten RD ableitet. Das erste Regelsystem 31 ist dabei dafür vorgesehen, aufgrund eines Notfallbetriebssignals NFS den Gleichspannungszwischenkreis vom externen Spannungsnetz ES1, ES2 zu trennen. Sollte eines oder beide der angeschlossenen Spannungsnetze (Stromnetze) ES1, ES2 aufgrund eines Netzausfalls nicht mehr zur Verfügung stehen, so manifestiert sich der Ausfall des jeweiligen Spannungsnetzes (Stromnetzes) ES1, ES2 auch in den entsprechenden, in dieser Ausführungsform auch an das Regelglied 81 übermittelten, relevanten Daten RD, woraufhin das Regelglied 81 in dieser Ausführungsform auch ohne Übermittlung entsprechender Konfigurationsdaten basierend auf einem Notfallbetriebssignals NFS von der Modulsteuereinheit 6 selber automatisch entsprechende Trenn-Anweisungen TA (gestichelter Pfeil) an den oder die betreffenden Trennschalter 82 zur Trennung des Energiespeichermoduls 1 von dem oder den angeschlossenen Spannungsnetzen (Stromnetzen) ES1, ES2 aussendet, woraufhin der oder die Trennschalter 82 das oder die vormals angeschlossenen Spannungsnetze (Stromnetze) ES1, ES2 von der Energiespeicheranlage 1 trennen. Die Trennung des angeschlossenen Spannungsnetzes erfolgt dabei innerhalb weniger Millisekunden. Bei der Trennung von nur einem Spannungsnetz bleibt das Energiespeichermodul 1 weiterhin für die anderen noch weiterhin angeschlossenen Spannungsnetze betriebsbereit. Damit kann bei Ausfall eines Spannungsnetzes ein Kurzschluss oder eine Überlastsituation im Energiespeichermodul 1 effektiv verhindert werden. Das hier gezeigte Ausführungsbeispiel mit einem angeschlossenen lokalen Spannungsnetz (lokales Stromnetz) ES1 und einem angeschlossenen nicht-lokalen Spannungsnetz (nicht-lokales Stromnetz) ES2 ist nur ein Bespiel für zwei angeschlossene Spannungsnetze (Stromnetze). Die Regelbox 8 kann in anderen Ausführungsformen auch an mehr als zwei Spannungsnetze (Stromnetze) angeschlossen sein. Die zwei oder mehr angeschlossenen Spannungsnetze (Stromnetze) können auch jeweils lokale Spannungsnetze (lokale Stromnetze) sein, von denen zumindest eines der lokalen Spannungsnetze (lokale Stromnetze) mit dem nicht-lokalen Spannungsnetz (nicht-lokales Stromnetz) zur Ausführung der nicht-ortsgebundenen Regel- und Systemaufgaben SA (Steueranweisungen) verbunden ist. Die hier gezeigte Regelbox 8 ist beispielsweise in dem ersten Regelsystem 31 angeordnet.

Fig.3 zeigt in einem anderen Ausführungsbeispiel die im zweiten Regelsystem 32 angeordnete Regelbox 8 mit einem zusätzlich mit der Eingangsseite 32E verbundenen externen Spannungsnetz ES2 zur Versorgung des Versorgungsnetzes 4 im Normalbetrieb NO. Hier ist einer der Trennschalter 82 mit einem externen Spannungsnetz ES2 und der andere der Trennschalter 82 mit dem Gleichspannungszwischenkreis 3 verbunden ist. Das Regelglied 81 steuert die Trennschalter 82 hier so, dass nach Trennung des Trennschalters 82 zum externen Spannungsnetzes ES2 im Notfallbetrieb NF der vorher geöffnete Trennschalter 82 zum Gleichspannungszwischenkreis 3 geschlossen wird, damit das interne Versorgungsnetz 4 mit dem Gleichspannungszwischenkreis 3 zur Versorgung des internen Versorgungsnetz 4 mit Versorgungsnetzspannung VS verbunden wird (die gestrichelten Pfeile geben die Richtung des Leistungsflusses an). Das Energiespeichermodul 1 ist hier nicht explizit gezeigt, sondern nur symbolisch über die entsprechenden Komponenten dargestellt. Die Regelbox 8 empfängt simultan die relevanten Daten RD aus dem angeschlossenen Spannungsnetz (Stromnetz) ES2 über die Messeinheit 7, woraus das Regelglied 81 das Vorhandensein des angeschlossenen Spannungsnetz (Stromnetz) ES2 mittels der in dem Regelglied 81 hinterlegten Kriterien oder Schwellwerte für die relevanten Daten RD ableitet. Sollte das angeschlossene Spannungsnetz (Stromnetz) ES2 aufgrund eines Netzausfalls nicht mehr zur Verfügung stehen, so manifestiert sich der Ausfall des Spannungsnetzes (Stromnetzes) ES2 in den entsprechenden, an das Regelglied 81 übermittelten relevanten Daten RD, woraufhin das Regelglied 81 in einer Ausführungsform auch ohne entsprechende Konfigurationsdaten KD von der Modulsteuereinheit 6 selber automatisch entsprechende Trenn-Anweisungen TA (gestichelter Pfeil) an den Trennschalter 82 zur Trennung des internen Versorgungsnetzes 4 von dem Spannungsnetz (Stromnetz) ES2 aussendet, woraufhin der Trennschalter 82 das vormals angeschlossene Spannungsnetz (Stromnetze) ES2 von dem Versorgungsnetz trennt. Die Trennung des angeschlossenen Spannungsnetzes erfolgt dabei innerhalb weniger Millisekunden. Durch den danach als Reaktion darauf erfolgenden Anschluss des internen Versorgungsnetzes 4 an den Gleichspannungszwischenkreis 3 zur Versorgung mit der Versorgungsspannung VS können die Betriebsaggregate weiterhin betrieben werden. Damit kann bei Ausfall eines Spannungsnetzes ES2 ein Kurzschluss oder eine Überlastsituation im Energiespeichermodul 1 bei fortgestehender Betriebsbereitschaft effektiv verhindert werden.

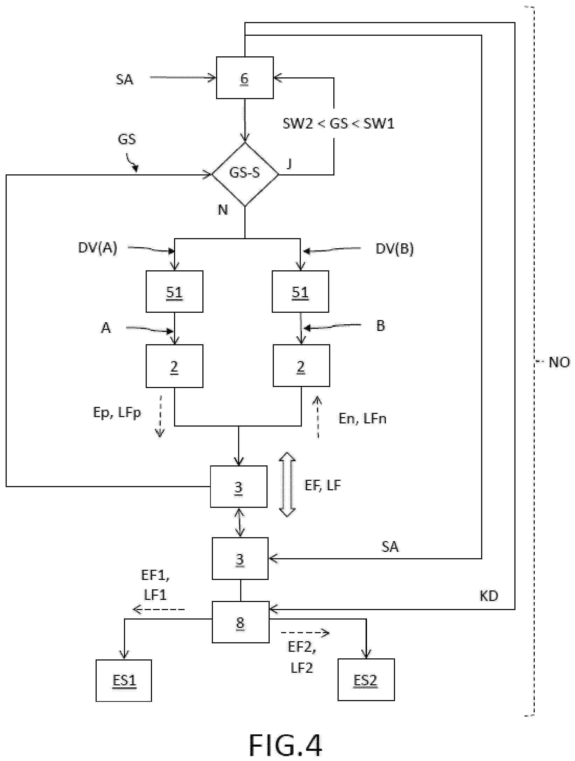

Fig. 4 zeigt eine Ausführungsform des erfindungsgemäßen Verfahrens zum Betreiben des Energiespeichermoduls 1 im Normalbetrieb NO. Die Modulsteuereinheit 6 empfängt externe Steueranweisungen SA (Regel- und Systemaufgaben) und prüft, ob die Gleichspannung GS des Gleichspannungszwischenkreises 3 dem Gleichspannungs-Sollwert GS-S entspricht. Ist dem so (GS-S = "J" entspricht SW2 < GS < SW1) und liegen keine anders lautenden Regel- und Systemaufgaben zur Einspeisung von Energie oder Entnahme von Energie in/aus den angeschlossenen Spannungsnetzen ES1, ES2 vor, dann hält die Modulsteuereinheit 6 mittels entsprechender Drehmomentvorgaben DV an die Schwungradspeichereinheiten die Gleichspannung im Gleichspannungszwischenkreis im Sollbereich. Übersteigt die Gleichspannung GS den Gleichspannungs-Sollwert (GS-S = "N"), so wird eine Drehmomentvorgabe DV zum Beschleunigen B der Schwungradspeichereinheiten 2 bei einem Energiefluss Ep aus dem Spannungsnetz ES1, ES2 heraus in den Gleichspannungszwischenkreis 3 hinein übermittelt (von den Motorregelungen 51 oder der Modulsteuereinheit 6). Unterschreitet die Gleichspannung GS den Gleichspannungs-Sollwert (GS-S = "N"), so wird eine Drehmomentvorgabe DV zum Abbremsen A der Schwungradspeichereinheiten 2 bei einem Energiefluss En aus dem Gleichspannungszwischenkreis 3 heraus in das Spannungsnetz ES1, ES2 hinein übermittelt (von den Motorregelungen 51 oder der Modulsteuereinheit 6). Die Regelbox 8 regelt gemäß der Konfigurationsdaten für die Regelfunktion KD, die sie von der Modulsteuereinheit 6 erhält, die Energie- und Leistungsflüsse EF, LF, die sie von dem Regelsystem 31 erhält, in die Energie- und Leistungsflüsse EF1, LF1 und EF2, LF2 für jeweiligen Spannungsnetze ES1, ES2 gemäß den Anteilen nach den Regel- und Systemaufgaben SA für die angeschlossenen externen Spannungsnetze ES1, ES2.

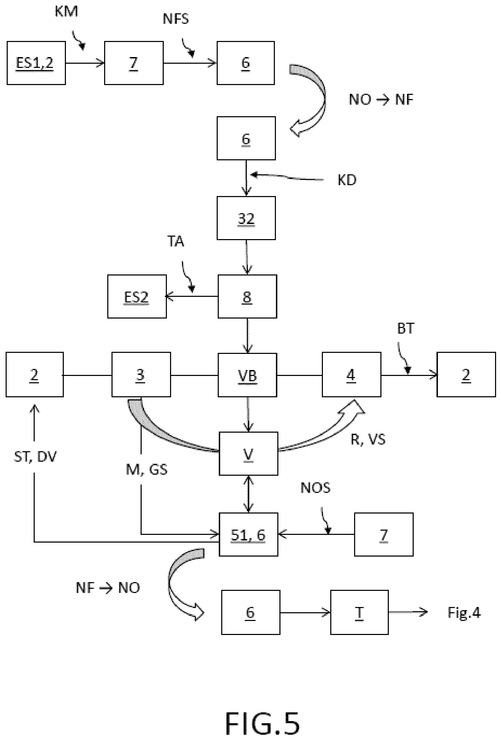

Fig.5 zeigt eine weitere Ausführungsform des erfindungsgemäßen Verfahrens zum Betreiben des Energiespeichermoduls 1 im Notfallbetrieb NF, das sich anfangs noch im Normalbetrieb NO befindet. Dieses Energiespeichermodul umfasst ein zweites Regelsystem 32, das direkt mit einem externen Spannungsnetz ES2 zur Versorgung des Versorgungsnetzes 4 verbunden ist. Die Regelbox 8 entspricht dabei der Regelbox aus Fig.3. Während des Normalbetriebs NO wird die Spannungsqualität der mit dem Energiespeichermodul 1 verbundenen externen Spannungsnetze ES1, ES2 durch ein oder mehrere Messeinheiten 7 des Energiespeichermoduls 1 kontinuierlich gemessen KM. Die Messeinheit 7 sendet dabei ein Notfallbetriebssignals NFS innerhalb des Energiespeichermoduls 1 bei einer Über- oder Unterspannung in zumindest dem an das interne Versorgungsnetz 4 angeschlossenen externen Spanungsnetz ES2 aus. In Folge dessen schaltet die Modulsteuereinheit 6 vom Normalbetrieb NO auf den Notfallbetrieb NF (dargestellt durch Pfeil) um und veranlasst das zweite Regelsystem 32, das externe Spannungsnetzes ES2 zumindest vom internen Versorgungsnetz 4 zu trennen, indem entsprechende Konfigurationsdaten KD an die Regelbox 8 des zweiten Regelsystems 32 übermittelt werden, woraufhin die Regelbox 8 mittels des Trennsignals TA das externe Spannungsnetz ES2 vom Energiespeichermodul 1 abtrennt. Danach wird der Gleichspannungszwischenkreises 3 über das zweite Regelsystem 32 mit dem internen Versorgungsnetz 4 verbunden VB und das interne Versorgungsnetzes 4 mit der zum fortgeführten Betrieb BT der Schwungradspeichereinheiten 2 erforderlichen Versorgungsnetzspannung VS aus dem Gleichspannungszwischenkreis 3 versorgt V. Diese Versorgung kann bei ausreichend großer Speicherkapazität des Energiespeichermoduls über ein langes erstes Zeitintervall T ohne funktionale Einschränkungen aufrechterhalten werden. Dabei wird die Versorgungsnetzspannung VS des internen Versorgungsnetzes 4 auf einen konstanten Wert durch bedarfsgerechte Stromlieferung aus dem Gleichstromzwischenkreis 3 geregelt R, wozu die Spannung des Gleichspannungszwischenkreis 3 entweder durch die Motorsteuerungen 51 oder mittels mindestens einer Messeinrichtung 33 gemessen M wird und die Schwungradspeichereinheiten 2 auf Basis der gemessenen Spannung GS so über zeitbezogene Drehmomentvorgaben DV durch die Motorsteuerung 51 gesteuert ST (alternativ auch durch die Modulsteuereinheit 6), so dass über Energieabgabe Ep aus ein oder mehreren Schwungradspeichereinheit 2 in den Gleichspannungszwischenkreis 3 dessen Spannung GS nicht unter den unteren Schwellenwert SW2 absinkt, zumindest solange die in den Schwungradspeichereinheiten 2 gespeichert Menge an Energie nicht unter eine Mindestenergie absinkt. Sobald die externen Spannungsnetze ES1, ES2 (zumindest das externe Spannungsnetz ES2 für die Versorgung des internen Versorgungsnetz 4 wieder verfügbar ist, sendet die Messeinheit 7 ein Normalbetriebssignals NOS aus und die Modulsteuereinheit 6 wechselt vom Notfallbetrieb NF wieder zurück in den Normalbetrieb NO, wobei das internen Versorgungsnetz 4 wieder mit dem oder den externen Spannungsnetzen ES2 verbunden und die elektrische Verbindung zwischen dem Gleichspannungskreis 3 und dem internen Versorgungsnetz 4 durch das zweite Regelsystem 32 als automatische Reaktion aufgrund des Normalbetriebssignals NOS wieder getrennt T wird. Anschließend wird der Normalbetrieb NO wieder wie in Fig.4 gezeigt fortgeführt. Falls die im Energiespeichermodul 1 gespeicherte Energiemenge unter eine Mindestmenge absinken sollte, wird in einer weiteren Ausführungsform das Energiespeichermodul 1 heruntergefahren und das internen Versorgungsnetzes 4 vom Gleichspannungszwischenkreis 3 mittels des zweiten Regelsystems 32 getrennt.

### Liste der Bezugszeichen

- 1: erfindungsgemäßes Energiespeichermodul
- 13: Datenleitung, Datenbus
- 2: Schwungradspeichereinheit
- 3: Gleichspannungszwischenkreis
- 31: erstes Regelsystem
- 32: zweites Regelsystem
- 32A: Ausgangsseite zweites Regelsystem
- 32E: Eingangsseite zweites Regelsystem
- 33: Messeinrichtung zur Messung der Spannung in Gleichspannungszwischenkreis
- 4: internes Versorgungsnetz
- 51: Betriebsaggregat: Motorregelung
- 51d: direkte Datenverbindung zwischen den Motorregelungen für NF
- 52: Betriebsaggregat: Bauteil zur Drehzahlbegrenzung
- 53: Betriebsaggregat: elektromagnetischer Wandler
- 54: Betriebsaggregat: Vakuumsystem, Kühlsystem, Magnetlagersystem andere Versorgungssysteme
- 6: Modulsteuereinheit
- 61: Speicher zur Speicherung externer Daten
- 62: Prioritätsmanagement zur Ausführung der Steueranweisungen
- 7: Messeinheit
- 8: Regelbox
- 81: Regelglied
- 82: Trennschalter
- 9: Leistungssenke
- 10: Verbindung externes Spannungsnetz mit Eingangsseite zweites Regelsystem

- A: Abbremsen der Schwungradspeichereinheiten
- B: Beschleunigen der Schwungradspeichereinheiten
- DV: Drehmomentvorgabe
- EF: Energiefluss
- EF1, EF2: Energiefluss in externes Spannungsnetz ES1, ES2
- En, LFn: Energiefluss/Leistungsfluss in das Energiespeichermodul oder die Schwungradspeichereinheiten hinein (negativer Energiefluss/Leistungsfluss)
- Ep, LFn: Energiefluss/Leistungsfluss aus dem Energiespeichermodul oder den Schwungradspeichereinheiten hinaus (positiver Energiefluss/Leistungsfluss)
- EK: Einheitenspeicherkapazität der Schwungradspeichereinheiten
- EL: Einheitenspeicherleistung der Schwungradspeichereinheiten
- En: Aufnahme von Energie aus dem Spannungsnetz
- Ep: Abgabe von Energie in das Spannungsnetz
- ES1: externes Spannungsnetz angeschlossen an erstes Regelsystem
- ES2: externes Spannungsnetz angeschlossen an zweites Regelsystem
- GS: Gleichspannung im Gleichspannungszwischenkreis
- GS-S: Sollwert der Gleichspannung im Gleichspannungszwischenkreis
- KM: kontinuierliches Messen der Spannungsqualität in ES1, ES2
- LF: Leistungsfluss
- LF1, LF2: Leistungsfluss in externes Spannungsnetz ES1, ES2
- M: Messen der Spannung im Gleichspannungszwischenkreis
- NO: Normalbetrieb
- NOS: Normalbetriebssignal
- NF: Notfallbetrieb
- NFS: Notfallbetriebssignal
- KD: Konfigurationsdaten
- R: Regeln der Versorgungsnetzspannung
- RD: relevante Daten
- SA: externe Steueranweisungen (Regel- und Systemaufgaben)
- ST: Steuern der Schwungradspeichereinheiten
- SW1: oberer Schwellwert für die Gleichspannung
- SW2: unterer Schwellwert für die Gleichspannung
- TA: Trennungsanweisung, Trennen vom externen Spannungsnetz
- V: Versorgen des Versorgungsnetzes mit Spannung
- VB: Verbinden des internen Versorgungsnetzes mit dem Gleichspannungszwischenkreis
- VS: Versorgungsnetzspannung

## Patentansprüche

1. Ein Energiespeichermodul (1) zur reversiblen Speicherung von elektrischer Energie, umfassend mehrere elektrisch parallel über einen gemeinsamen innerhalb des Energiespeichermoduls (1) angeordneten Gleichspannungszwischenkreis (3) verbundene Schwungradspeichereinheiten (2) und ein erstes mit dem Gleichspannungszwischenkreis (3) verbundenes Regelsystem (31) des Energiespeichermoduls (1), das in einem Normalbetrieb (NO) den Gleichspannungszwischenkreis (3) mit einem oder mehreren außerhalb des Energiespeichermoduls (1) angeordneten externen Spannungsnetzen (ES1, ES2) zur Aufnahme (En) / Abgabe (Ep) von Energie an / in das oder die externen Spannungsnetze (ES1, ES2) verbindet,
**dadurch gekennzeichnet,**
**dass** das Energiespeichermodul des Weiteren ein zweites Regelsystem (32) mit einer Eingangsseite (32E) und einer Ausgangsseite (32A) umfasst, wobei die Eingangsseite (32E) zumindest mit dem Gleichspannungszwischenkreis (3) und die Ausgangsseite (32A) mit einem internen Versorgungsnetz (4) des Energiespeichermoduls (1) zur Versorgung ein oder mehrerer zum Betrieb der Schwungradspeichereinheiten (2) benötigter strombetriebener Betriebsaggregate (51, 52, 53, 54) verbunden ist, wobei alle strombetriebenen Betriebsaggregate (51, 52, 53, 54) der Schwungradspeichereinheiten an das interne Versorgungsnetz angeschlossen sind, das im Normalbetrieb (NO) direkt oder indirekt über den Gleichspannungszwischenkreis (3) mit dem externen Spannungsnetze (ES2) zur Energieversorgung der Betriebsaggregate (51, 52, 53, 54) verbunden ist, wobei das zweite Regelsystem (32) dazu ausgestaltet ist, zumindest in einem Notfallbetrieb (NF) bei fehlendem externen Spannungsnetz (ES1, ES2) den Gleichspannungszwischenkreis (3) mit dem internen Versorgungsnetz (4) zu verbinden und das interne Versorgungsnetz (4) zum fortgeführten Betrieb der Schwungradspeichereinheiten (2) mit einer erforderlichen Versorgungsleistung (VL) alleine aus dem Gleichspannungszwischenkreis (3) zumindest in einem ersten Zeitintervall (T) zu versorgen.

2. Das Energiespeichermodul (1) nach Anspruch 1,
**dadurch gekennzeichnet,**
**dass** im Notfallbetrieb (NF) das zweite Regelsystem (32) die Versorgungsnetzspannung (VS) im internen Versorgungsnetz (4) durch bedarfsgerechte Stromlieferung aus dem Gleichspannungszwischenkreis (3) im Wesentlichen konstant regelt.

3. Das Energiespeichermodul (1) nach Anspruch 2,
**dadurch gekennzeichnet,**
**dass** die Eingangsseite (32E) des zweiten Regelsystems (32) zusätzlich mit einem externen Spannungsnetz (ES2) verbunden ist und das zweite Regelsystem dazu vorgesehen ist, die Versorgungsleistung für das interne Versorgungsnetz im Normalbetrieb (NO) aus dem externen Spannungsnetz und im Notfallbetrieb aus dem Gleichspannungszwischenkreis (3) bereit zu stellen.

4. Das Energiespeichermodul (1) nach Anspruch 3,
**dadurch gekennzeichnet,**
**dass** das Energiespeichermodul (1) dazu ausgestattet ist, die Gleichspannung (GS) im Gleichspannungszwischenkreis (3) kontinuierlich zu überwachen und die Schwungradspeichereinheiten (2) jeweils Motorregelungen (51) umfassen, die dafür ausgestaltet sind, unabhängig von einer Modulsteuereinheit (6) zur Steuerung der Schwungradspeichereinheiten (2) im Normalbetrieb im Notfallbetrieb (NF) zumindest auf Basis der überwachten Gleichspannung (GS) die Gleichspannung (GS) im Gleichspannungszwischenkreis (3) über Energieabgabe (EFp) aus den jeweiligen Schwungradspeichereinheiten (2) nicht unter einen unteren Schwellenwert (SW2) absinken zu lassen, zumindest solange die in den jeweiligen Schwungradspeichereinheiten (2) gespeicherte Menge an Energie nicht unter eine Mindestenergie absinkt.

5. Das Energiespeichermodul (1) nach Anspruch 4,
**dadurch gekennzeichnet,**
**dass** im Gleichspannungszwischenkreis (3) mindestens eine Messeinrichtung (33) zur Messung der Gleichspannung (GS) im Gleichspannungszwischenkreis (3) angeordnet und zumindest mit den jeweiligen Motorregelungen der Schwungradspeichereinheiten (2) verbunden ist,

6. Das Energiespeichermodul (1) nach Anspruch 5,
**dadurch gekennzeichnet,**
**dass** die Motorregelungen (51) der einzelnen Schwungradspeichereinheiten (2) unabhängig von der Modulsteuereinheit (6) direkt miteinander verbunden sind und jeweils eine Schwungradsteuerung umfassen, die dafür vorgesehen ist, einen gemeinsam koordinierten Stützbetrieb (SB) der Gleichspannung (GS) im Gleichspannungszwischenkreis (3) durch alle Schwungradspeichereinheiten (2) im Notfallbetrieb (NF) auszuführen.

7. Das Energiespeichermodul (1) nach Anspruch 6,
**dadurch gekennzeichnet,**
**dass** das Energiespeichermodul (1) ein oder mehrere Messeinheiten (7) zur kontinuierlichen Messung der Spannungsqualität der mit dem Energiespeichermodul (1) verbundenen externen Spannungsnetze (ES1, ES2) umfasst, wobei die Messeinheit (7) oder die Messeinheiten (7) dazu ausgestaltet sind, bei einer Über- oder Unterspannung zumindest in einem der angeschlossenen externen Spanungsnetze (ES2) ein Notfallbetriebssignal (NFS) innerhalb des Energiespeichermodul (1) auszusenden, und das zweite Regelsystem dazu vorgesehen sind, als automatische Reaktion auf das Notfallbetriebssignal (NFS) vom Normalbetrieb (NO) in den Notfallbetrieb (NF) zu wechseln.

8. Das Energiespeichermodul (1) nach Anspruch 7,
**dadurch gekennzeichnet,**
**dass** das erste Regelsystem (31) dafür vorgesehen ist, aufgrund des Notfallbetriebssignals (NFS) den Gleichspannungszwischenkreis vom externen Spannungsnetz (ES1, ES2) zu trennen und/oder das zweite Regelsystem (32) dafür vorgesehen ist, aufgrund des Notfallbetriebssignals (NFS) das interne Versorgungsnetz (4) vom externen Stromnetz (ES2) zu trennen.

9. Das Energiespeichermodul (1) nach Anspruch 8,
**dadurch gekennzeichnet,**
**dass** die Messeinheiten (7) dazu ausgestaltet sind, bei einer Wiederverfügbarkeit des externen Spanungsnetzes (ES1, ES2) ein Normalbetriebssignal (NOS) innerhalb des Energiespeichermoduls (1) auszusenden, und das Energiespeichermodul (1) dazu vorgesehen ist, als automatische Reaktion auf das Normalbetriebssignal (NOS) vom Notfallbetrieb (NF) in den Normalbetrieb (NO) zu wechseln und den Gleichspannungszwischenkreis (3) und das interne Versorgungsnetz (4) wieder mit dem oder den externen Spannungsnetzen (ES1, ES2) zu verbinden.

10. Ein Verfahren zum Steuern eines Energiespeichermoduls (1) nach Anspruch 1 umfassend die Schritte
- Abgeben (Ep) oder Aufnehmen (En) von Energie aus einem gemeinsamen innerhalb des Energiespeichermoduls (1) angeordneten Gleichspannungszwischenkreis (3), an den mehrere Schwungradspeichereinheiten (2) elektrisch parallel angeschlossen sind, an/von ein oder mehreren außerhalb des Energiespeichermoduls (1) angeordneten externen Spannungsnetze (ES1, ES2), die über ein erstes Regelsystem (31) des Energiespeichermoduls (1) mit dem Gleichspannungszwischenkreis (3) verbunden sind, und
- Versorgen der ein oder mehreren zum Betrieb (BT) der Schwungradspeichereinheiten (2) benötigten Betriebsaggregate (51, 52, 53, 54) über ein internes Versorgungsnetz (4) des Energiespeichermoduls (1), an das alle strombetriebenen Betriebsaggregate (51, 52, 53, 54) der Schwungradspeichereinheiten (2) angeschlossen sind und das im Normalbetrieb (NO) direkt oder indirekt über den Gleichspannungszwischenkreis (3) mit dem externen Spannungsnetze (ES2) zur Energieversorgung der Betriebsaggregate (51, 52, 53, 54) verbunden ist, mit der zum Betrieb (BT) der Betriebsaggregate (51, 52, 53, 54) notwendigen Energie während eines Normalbetriebs (NO) des Energiespeichermoduls, wobei das interne Versorgungsnetz (4) mit einer Ausgangsseite (32A) eines zweiten Regelsystems (32) verbunden ist, dessen Eingangsseite (32E) zumindest mit dem Gleichspannungszwischenkreis (2) verbunden ist und
- Umschalten des Energiespeichermoduls von Normalbetrieb (NO) auf einen Notfallbetrieb (NF) bei fehlendem externen Spannungsnetz (ES1, ES2), und
- Versorgen (V) des internen Versorgungsnetzes (4) mit der zum fortgeführten Betrieb (BT) der Schwungradspeichereinheiten (2) erforderlichen Versorgungsleistung (VL) bei fehlendem externem Stromnetz (ES1, ES2) alleine aus dem Gleichspannungszwischenkreis (3) zumindest in einem ersten Zeitintervall (T).

11. Ein Verfahren nach Anspruch 10, umfassend den weiteren Schritt des
- Regelns (R) der Versorgungsnetzspannung (VS) des internen Versorgungsnetzes (4) auf einen konstanten Wert durch bedarfsgerechte Stromlieferung aus dem Gleichstromzwischenkreis (3) durch das zweite Regelsystem (32).

12. Ein Verfahren nach Anspruch 11, umfassend den weiteren Schritt
- kontinuierliches Überwachen der Gleichspannung (GS) des Gleichspannungszwischenkreis (3), vorzugsweise mittels mindestens einer Messeinrichtung (33) angeordnet im Gleichspannungszwischenkreis (3), und
- Steuern (ST) der Schwungradspeichereinheiten (2) unabhängig von einer Modulsteuereinheit (6) zur Steuerung der Schwungradspeichereinheiten (2) für den Normalbetrieb (NO) im Notfallbetrieb (NF) mittels jeweiliger Motorregelungen (51) in den einzelnen Schwungradspeichereinheiten (2) auf Basis der überwachten Gleichspannung (GS), so dass über Energieabgabe (EFp) aus den jeweiligen Schwungradspeichereinheiten (2) in den Gleichspannungszwischenkreis (3) dessen Gleichspannung (GS) nicht unter einen unteren Schwellenwert (SW2) absinkt, zumindest solange die in den Schwungradspeichereinheiten (2) gespeichert Menge an Energie nicht unter eine Mindestenergie absinkt, vorzugsweise mittel Vorgabe zeitbezogener Drehmomentvorgaben (DV) für die jeweiligen Schwungradspeichereinheiten (2).

13. Ein Verfahren nach Anspruch 12, umfassend den weiteren Schritt
- Durchführen eines gemeinsam koordinierten Stützbetriebs (SB) aller Schwungradspeichereinheit (2) durch die Motorregelungen (51) zur Regelung der Gleichspannung (GS) im Gleichspannungszwischenkreis (3) auf einen konstanten Wert im Notfallbetrieb (NF), indem die Motorregelungen jeweils Schwungradsteuerungen umfassen und die einzelnen Motorregelungen der Schwungradspeichereinheiten (2) unabhängig von der Modulsteuerung (6) miteinander verbunden sind, und
- ein gezieltes Ausschließen einzelner Schwungradspeichereinheiten (2) von dem gemeinsamen Stützbetrieb (SB) zur Bereitstellung einer Mindestmenge an Energie für einen kontrollierten Ablauf der Schwungradspeichereinheiten (2).

14. Ein Verfahren nach Anspruch 13, umfassend den weiteren Schritt
- Trennen des internen Versorgungsnetzes (4) vom Gleichspannungszwischenkreis (3) mittels des zweiten Regelsystems (32), sobald die in den Schwungradspeichereinheiten (2) gespeicherte Menge an Energie unter eine Mindestenergie absinkt.

15. Ein Verfahren nach einem der Ansprüche 10 bis 14, umfassend die weiteren Schritte
- kontinuierliches Messen (KM) der Spannungsqualität in den mit dem Energiespeichermodul (1) verbundenen externen Spannungsnetze (ES1, ES2) durch ein oder mehrere Messeinheiten (7) des Energiespeichermoduls,
- Aussenden eines Notfallbetriebssignals (NFS) innerhalb des Energiespeichermoduls (1) durch eine Messeinheit (7) bei einer Über- oder Unterspannung in zumindest einem der angeschlossenen externen Spanungsnetze (ES1, ES2),
- Trennen des oder der externen Spannungsnetzes (ES1, ES2) zumindest vom Gleichspannungszwischenkreis (2) durch das erste Regelsystem (31),
- Wechseln der Schwungradspeichereinheiten (2) vom Normalbetrieb (NO) in den Notfallbetrieb (NF) und Versorgen des internen Versorgungsnetz (4) mit der erforderlichen Versorgungsleistung (VL) durch das zweite Regelsystem (32) aus dem Gleichspannungszwischenkreis (3) als automatische Reaktion auf ein Abfallen der Gleichspannung (GS) im Gleichspannungszwischenkreis (3) oder als automatische Reaktion aufgrund des Notfallbetriebssignals (NFS),
- Aussenden eines Normalbetriebssignals (NOS) durch die Messeinheiten (7) bei einer Wiederverfügbarkeit des externen Spanungsnetzes (ES1, ES2),
- Wechseln vom Notfallbetrieb (NF) in den Normalbetrieb (NO) des Energiespeichermoduls (1), und
- Verbinden des internen Versorgungsnetzes (4) mit dem oder den externen Spannungsnetzen (ES2), vorzugsweise durch das zweite Regelsystem (32), als automatische Reaktion aufgrund des Normalbetriebssignals (NOS).

## Claims

1. An energy storage module (1) for the reversible storage of electric energy, comprising several flywheel energy storage units (2) that are electrically connected in parallel via a shared DC link (3) arranged inside the energy storage module (1), and comprising a first regulation system (31) of the energy storage module (1) that is connected to the DC link (3) and that, during normal operation (NO), connects the DC link (3) to one or more external power networks (ES1, ES2) arranged outside of the energy storage module (1) in order to withdraw (En) energy from or release (Ep) energy into the external power network(s) (ES1, ES2),
**characterized in that**
the energy storage module also comprises a second regulation system (32) having an input side (32E) and an output side (32A), whereby the input side (32E) is connected to at least the DC link (3) while the output side (32A) is connected to an internal supply network (4) of the energy storage module (1) for purposes of supplying one or more electrically powered operating aggregates (51, 52, 53, 54) that are needed to operate the flywheel energy storage units (2), whereby all of the electrically powered operating aggregates (51, 52, 53, 54) of the flywheel storage units are connected to the internal supply network that, during normal operation (NO), is directly or indirectly connected via the DC link (3) to the external power networks (ES2) in order to supply energy to the operating aggregates (51, 52, 53, 54),
whereby the second regulation system (32) is configured to connect the DC link (3) to the internal supply network (4), at least during emergency operation (NF) when the external power network (ES1, ES2) is absent, and to supply the internal supply network (4) with the requisite supply power (VL) only from the DC link (3) in order to ensure the continued operation of the flywheel energy storage units (2), at least during a first time interval (T).

2. The energy storage module (1) according to claim 1, **characterized in that,** during emergency operation (NF), the second regulation system (32) regulates the supply network voltage (VS) in the internal supply network (4) in an essentially constant manner in that, depending on the demand, it supplies power from the DC link (3).

3. The energy storage module (1) according to claim 2, **characterized in that** the input side (32E) of the second regulation system (32) is additionally connected to an external power network (ES2) and the second regulation system is configured to provide the supply power for the internal supply network from the external power network during normal operation (NO), and from the DC link (3) during emergency operation.

4. The energy storage module (1) according to claim 3, **characterized in that** the energy storage module (1) is configured to continuously monitor the direct voltage in the DC link (3), and the flywheel energy storage units (2) each have motor control means (6) which, independently of a module control unit (6) for controlling the flywheel energy storage units (2) during normal operation, are configured so that, in the case of emergency operation (NF) - at least on the basis of the monitored direct voltage (GS) - they do not allow the direct voltage (GS) in the DC link (3) to fall below a lower threshold value (SW2) **in that** they release (EFp) energy from the appertaining flywheel energy storage units (2), at least as long as the amount of energy stored in the appertaining flywheel energy storage units (2) has not fallen below a minimum energy level.

5. The energy storage module (1) according to claim 4, **characterized in that** there is at least one measuring device (33) in the DC link (3) for purposes of measuring the direct voltage (GS) in the DC link (3), and said device is connected at least to the appertaining motor control means of the flywheel storage units (2).

6. The energy storage module (1) according to claim 5, **characterized in that** the motor control means (51) of the individual flywheel storage units (2) are connected directly to each other, independently of the module control unit (6), and they each comprise a flywheel control means which is configured to carry out a jointly coordinated support operation (SB) of the direct voltage (GS) in the DC link (3) by all of the flywheel storage units (2) during emergency operation (NF).

7. The energy storage module (1) according to claim 6, **characterized in that** the energy storage module (1) comprises one or more measuring units (7) to continuously measure the voltage quality of the external power networks (ES1, ES2) connected to the energy storage module (1), whereby the measuring unit or units (7) are configured to emit an emergency operation signal (NFS) within the energy storage module (1) in case of an overvoltage or an undervoltage in at least one of the connected external power networks (ES2), and the second regulation system is configured to switch over from normal operation (NO) to emergency operation (NF) as an automatic response to the emergency operation signal (NFS).

8. The energy storage module (1) according to claim 7, **characterized in that** the first regulation system (31) is configured to disconnect the DC link (3) from the external power network (ES1, ES2) in response to the emergency operation signal (NFS), and/or the second regulation system (32) is configured to disconnect the internal supply network (4) from the external power network (ES2) in response to the emergency operation signal (NFS).

9. The energy storage module (1) according claim 8, **characterized in that** the measuring units (7) are configured to send a normal operation signal (NOS) within the energy storage module (1) once the external power network (ES1, ES2) is available again, and the energy storage module (1) is configured to change over from emergency operation (NF) to normal operation (NO) as an automatic response to the normal operation signal (NOS) and to connect the DC link (3) and the internal supply network (4) to the external power network(s) (ES1, ES2).

10. A method for controlling an energy storage module (1) according to claim 1, comprising the following steps:
- energy from a shared DC link (3) arranged inside the energy storage module (1) and to which several flywheel storage units (2) are electrically connected in parallel is released (Ep) into or withdrawn (En) from one or more external power networks (ES1, ES2) that are arranged outside of the energy storage module (1) and that are connected to the DC link (3) via a first regulation system (31) of the energy storage module (1), and
- the one or more operating aggregates (51, 52, 53, 54) needed to operate (BT) the flywheel storage units (2) are supplied with the energy required to operate (BT) the operating aggregates (4) during the normal operation (NO) of the energy storage module via an internal supply network (4) of the energy storage module (1), to which all of the electrically powered operating aggregates (51, 52, 53, 54) of the flywheel storage units (2) are connected and which, during normal operation (NO), is directly or indirectly connected via the DC link (3) to the external power networks (ES2) in order to supply energy to the operating aggregates (51, 52, 53, 54), whereby the internal supply network (4) is connected to an output side (32A) of a second regulation system (32) whose input side (32E) is connected at least to the DC link (3), and
- the energy storage module is switched over from normal operation (NO) to emergency operation (NF) when the external power network (ES1, ES2) is absent, and
- the internal supply network (4) is supplied (V) with the supply power (VL) for the continued operation (BT) of the flywheel storage units (2) when the external power network (ES1, ES2) is absent, and this is done only from the DC link (3), at least during a first time interval (T).

11. The method according to claim 10, comprising the following additional step:
- the supply network voltage (VS) of the internal supply network (4) is regulated (R) to a constant value in that, depending on the demand, power is supplied from the DC link (3) by means of the second regulation system (32).

12. The method according to claim 11, comprising the following additional steps:
- the direct voltage (GS) of the DC link (3) is continuously monitored, preferably by means of at least one measuring device (33) arranged in the DC link (3), and
- independently of a module control unit (6) for controlling the flywheel storage units (2) during normal operation (NO), in case of emergency operation (NF), the flywheel storage units (2) are controlled (ST) by means of appertaining motor control means (51) in the individual flywheel storage units (2) on the basis of the monitored direct voltage (GS), so that, due to the release (EFp) of energy from the appertaining flywheel storage units (2) into the DC link (3), its direct voltage (GS) does not fall below a lower threshold value (SW2), at least as long as the amount of energy stored in the flywheel storage units (2) does not fall below a minimum energy level, preferably by stipulating time-related torque specifications (DV) for the appertaining flywheel storage units (2).

13. The method according to claim 12, comprising the following additional steps:
- a jointly coordinated support operation (SB) of all flywheel storage units (2) is carried out by means of the motor control means (51) in order to regulate the direct voltage (GS) in the DC link (3) to a constant value during emergency operation (NF) in that each motor control means encompasses flywheel control means, and the individual motor control means of the flywheel storage units (2) are connected to each other, independently of the module control unit (6), and
- individual flywheel storage units (2) are systematically excluded from the shared support operation (SB) in order to provide a minimum amount of energy for a controlled ramp-down of the flywheel storage units (2).

14. The method according to claim 13, comprising the following additional step:
- the internal supply network (4) is disconnected from the DC link (3) by means of the second regulation system (32) once the amount of energy stored in the flywheel storage units (2) has fallen below a minimum energy level.

15. The method according to one of claims 10 to 14, comprising the following additional steps:
- the voltage quality in the external power networks (ES1, ES2) that are connected to the energy storage module (1) is continuously measured (KM) employing one or more measuring units (7) of the energy storage module,
- an emergency operation signal (NFS) is emitted within the energy storage module (1) by one measuring unit (7) in case of an overvoltage or an undervoltage in at least one of the connected external power networks (ES1, ES2),
- the external power network(s) (ES1, ES2) is/are disconnected at least from the DC link (3) by means of the first regulation system (31),
- the flywheel storage units (2) are switched over from normal (NO) operation to emergency operation (NF) and the internal supply network (4) is supplied with the requisite supply power (VL) from the DC link (3) by means of the second regulation system (32) as an automatic response to a drop in the direct voltage (GS) in the DC link (3) or as an automatic response to the emergency operation signal (NFS),
- a normal operation signal (NOS) is emitted by the measuring units (7) once the external power network (ES1, ES2) becomes available once again,
- the energy storage module (1) is switched over from emergency operation (NF) to normal operation (NO), and
- the internal supply network (4) is connected to the external power network(s) (ES2), preferably by means of the second regulation system (32), as an automatic response to the normal operation signal (NOS).

## Revendications

1. Module de stockage d'énergie (1) pour le stockage réversible d'énergie électrique, comprenant plusieurs unités de stockage à volant d'inertie (2) reliées électriquement et en parallèle via un circuit intermédiaire à tension continue commun agencé dans le module de stockage d'énergie (1) et un premier système de réglage (31) du module de stockage d'énergie (1) relié au circuit intermédiaire à tension continue (3) et qui, dans un mode normal (NO), relie le circuit intermédiaire à tension continue (3) à un ou plusieurs réseaux de tension (ES1, ES2) externes agencés en dehors du module de stockage d'énergie (1) pour l'absorption (En) / la délivrance (Ep) d'énergie au niveau du ou des / au ou aux réseaux de tension externes (ES1, ES2),
**caractérisé en ce que**
le module de stockage d'énergie comprend en outre un deuxième système de réglage (32) avec un côté entrée (32E) et un côté sortie (32A), le côté entrée (32E) étant relié au moins au circuit intermédiaire à tension continue (3) et le côté sortie (32A), à un réseau d'alimentation interne (4) du module de stockage d'énergie (1) pour alimenter un ou plusieurs organes opératoires (51, 52, 53, 54) fonctionnant au courant et requis pour le fonctionnement des unités de stockage à volant d'inertie (2), tous les organes opératoires fonctionnant au courant (51, 52, 53, 54) des unités de stockage à volant d'inertie étant raccordés au réseau d'alimentation interne qui, en mode normal (NO), est relié directement ou indirectement, via le circuit intermédiaire à tension continue (3), au réseau de tension externe (ES2) pour l'alimentation en énergie des organes opératoires (51, 52, 53, 54), le deuxième système de réglage (32) étant réalisé pour, au moins dans un mode d'urgence (NF), en l'absence d'un réseau de tension externe (ES1, ES2), relier le circuit intermédiaire à tension continue (3) au réseau d'alimentation interne (4) et alimenter le réseau d'alimentation interne (4), pour la poursuite du fonctionnement des unités de stockage à volant d'inertie (2), avec une puissance d'alimentation requise (VL) uniquement à partir du circuit intermédiaire à tension continue (3) au moins dans un premier intervalle de temps (T).

2. Module de stockage d'énergie (1) selon la revendication 1,
**caractérisé en ce que**
en mode d'urgence (NF), le deuxième système de réglage (32) règle de manière sensiblement constante la tension du réseau d'alimentation (VS) dans le réseau d'alimentation interne (4) en fournissant du courant de manière appropriée aux besoins à partir du circuit intermédiaire à tension continue (3).

3. Module de stockage d'énergie (1) selon la revendication 2,
**caractérisé en ce que**
le côté entrée (32E) du deuxième système de réglage (32) est en outre relié à un réseau de tension externe (ES2) et le deuxième système de réglage est prévu pour fournir la puissance d'alimentation pour le réseau d'alimentation interne à partir du réseau de tension externe en mode normal (NO) et à partir du circuit intermédiaire à tension continue (3) en mode d'urgence.

4. Module de stockage d'énergie (1) selon la revendication 3,
**caractérisé en ce que**
le module de stockage d'énergie (1) est réalisé pour surveiller en continu la tension continue (GS) dans le circuit intermédiaire à tension continue (3) et les unités de stockage à volant d'inertie (2) comprennent respectivement des réglages moteur (51) qui sont conçus pour, indépendamment d'une unité de commande de module (6) pour la commande des unités de stockage à volant d'inertie (2) en mode normal, ne pas laisser tomber en dessous d'une valeur seuil inférieure (SW2), en mode d'urgence (NF), au moins sur la base de la tension continue surveillée (GS), la tension continue (GS) dans le circuit intermédiaire à tension continue (3) par le biais de la délivrance d'énergie (EFp) à partir des unités de stockage à volant d'inertie respectives (2), au moins tant que la quantité d'énergie stockée dans les unités de stockage à volant d'inertie respective (2) ne tombe pas en dessous d'une énergie minimum.

5. Module de stockage d'énergie (1) selon la revendication 4,
**caractérisé en ce que**,
dans le circuit intermédiaire à tension continue (3), au moins un dispositif de mesure (33) est agencé pour mesurer la tension continue (GS) dans le circuit intermédiaire à tension continue (3) et est relié au moins aux réglages moteur respectifs des unités de stockage à volant d'inertie (2).

6. Module de stockage d'énergie (1) selon la revendication 5,
**caractérisé en ce que**
les réglages moteur (51) des unités de stockage à volant d'inertie individuelles (2) sont reliés directement entre eux indépendamment de l'unité de commande de module (6) et comprennent respectivement une commande de volant d'inertie qui est prévue pour exécuter, en mode d'urgence (NF), un mode de soutien coordonné conjointement (SB) de la tension continue (GS) dans le circuit intermédiaire à tension continue (3) par toutes les unités de stockage à volant d'inertie (2) en mode d'urgence (NF).

7. Module de stockage d'énergie (1) selon la revendication 6,
**caractérisé en ce que**
le module de stockage d'énergie (1) comprend une ou plusieurs unités de mesure (7) pour mesurer en continu la qualité de la tension des réseaux de tension externes (ES1, ES2) reliés au module de stockage d'énergie (1), l'unité de mesure (7) ou les unités de mesure (7) étant réalisées pour émettre un signal de mode d'urgence (NFS) dans le module de stockage d'énergie (1) en cas de surtension ou de sous-tension au moins dans l'un des réseaux de tension externes raccordés (ES2), et le deuxième système de réglage étant prévu pour le passage, en réaction automatique au signal de mode d'urgence (NFS), du mode normal (NO) au mode d'urgence (NF).

8. Module de stockage d'énergie (1) selon la revendication 7,
**caractérisé en ce que**
le premier système de réglage (31) est prévu pour couper le circuit intermédiaire à tension continue du réseau de tension externe (ES1, ES2) en raison du signal de mode d'urgence (NFS) et/ou le deuxième système de réglage (32) est prévu pour couper le réseau d'alimentation interne (4) du réseau de courant externe (ES2) en raison du signal de mode d'urgence (NFS).

9. Module de stockage d'énergie (1) selon la revendication 8,
**caractérisé en ce que**
les unités de mesure (7) sont réalisées pour émettre un signal de mode normal (NOS) à l'intérieur du module de stockage d'énergie (1) lorsque le réseau de tension externe (ES1, ES2) est de nouveau disponible et le module de stockage d'énergie (1) est prévu pour le passage, en réaction automatique au signal de mode normal (NOS), du mode d'urgence (NF) au mode normal (NO) et pour de nouveau relier au ou aux réseaux de tension externes (ES1, ES2) le circuit intermédiaire à tension continue (3) et le réseau d'alimentation interne (4).

10. Procédé de commande d'un module de stockage d'énergie (1) selon la revendication 1, comprenant les étapes :
- délivrance (Ep) ou absorption (En) d'énergie, à partir d'un circuit intermédiaire à tension continue (3) commun agencé dans le module de stockage d'énergie (1) et auquel sont raccordées électriquement et en parallèle plusieurs unités de stockage à volant d'inertie (2), à un ou à plusieurs / d'un ou de plusieurs réseaux de tension externes (ES1, ES2) agencés en dehors du module de stockage d'énergie (1) et qui sont reliés au circuit intermédiaire à tension continue (3) via un premier système de réglage (31) du module de stockage d'énergie (1) et
- alimentation de l'un ou des plusieurs organes opératoires (51, 52, 53, 54) requis pour le fonctionnement (BT) des unités de stockage à volant d'inertie (2) via un réseau d'alimentation interne (4) du module de stockage d'énergie (1) auquel sont raccordés tous les organes opératoires fonctionnant au courant (51, 52, 53, 54) des unités de stockage à volant d'inertie (2) et qui, en mode normal (NO), est relié, directement ou indirectement, via le circuit intermédiaire à tension continue (3), au réseau de tension externe (ES2) pour l'alimentation en énergie der organes opératoires (51, 52, 53, 54), avec l'énergie requise pour le fonctionnement (BT) des organes opératoires (51, 52, 53, 54) pendant un mode normal (NO) du module de stockage d'énergie, le réseau d'alimentation interne (4) étant relié à un côté sortie (32A) d'un deuxième système de réglage (32) dont le côté entrée (32E) est relié au moins au circuit intermédiaire à tension continue (2) et
- commutation du module de stockage d'énergie du mode normal (NO) sur un mode d'urgence (NF) en l'absence d'un réseau de tension externe (ES1, ES2) et
- alimentation (V) du réseau d'alimentation interne (4) avec la puissance d'alimentation requise (VL) pour la poursuite du fonctionnement (BT) des unités de stockage à volant d'inertie (2), en l'absence d'un réseau de courant externe (ES1, ES2), uniquement à partir du circuit intermédiaire à tension continue (3) au moins dans un premier intervalle de temps (T).

11. Procédé selon la revendication 10, comprenant l'étape supplémentaire :
- réglage (R) de la tension du réseau d'alimentation (VS) du réseau d'alimentation interne (4) sur une valeur constante par fourniture de courant de manière appropriée aux besoins à partir du circuit intermédiaire à tension continue (3) par le deuxième système de réglage (32).

12. Procédé selon la revendication 11, comprenant l'étape supplémentaire :
- surveillance continue de la tension continue (GS) du circuit intermédiaire à tension continue (3), de préférence au moyen d'au moins un dispositif de mesure (33) agencé dans le circuit intermédiaire à tension continue (3), et
- commande (ST) des unités de stockage à volant d'inertie (2) indépendamment d'une unité de commande de module (6) pour la commande des unités de stockage à volant d'inertie (2) pour le mode normal (NO) en mode d'urgence (NF) au moyen de réglages moteur respectifs (51) dans les unités de stockage à volant d'inertie individuelles (2) sur la base de la tension continue surveillée (GS), de telle sorte que, par la délivrance d'énergie (EFp) à partir des unités de stockage à volant d'inertie respectives (2) au circuit intermédiaire à tension continue (3), la tension continue (GS) de celui-ci ne tombe pas en dessous d'une valeur seuil inférieure (SW2) au moins tant que la quantité d'énergie stockée dans les unités de stockage à volant d'inertie (2) ne tombe pas en dessous d'une énergie minimum, de préférence au moyen de la spécification de consignes de couple rapportées au temps (DV) pour les unités de stockage à volant d'inertie respectives (2).

13. Procédé selon la revendication 12, comprenant l'étape supplémentaire :
- exécution d'un mode de soutien coordonné conjointement (SB) de toutes les unités de stockage à volant d'inertie (2) par les réglages moteur (51) pour le réglage de la tension continue (GS) dans le circuit intermédiaire à tension continue (3) sur une valeur constante en mode d'urgence (NF) par le fait que les réglages moteur incluent respectivement des commandes de volant d'inertie et les réglages moteur individuels des unités de stockage à volant d'inertie (2) sont reliés entre eux indépendamment de la commande de module (6) et
- une exclusion ciblée d'unités de stockage à volant d'inertie individuelles (2) du mode de soutien conjoint (SB) pour la fourniture d'une quantité minimum d'énergie pour un fonctionnement contrôlé des unités de stockage à volant d'inertie (2).

14. Procédé selon la revendication 13, comprenant l'étape supplémentaire :
- coupure du réseau d'alimentation interne (4) du circuit intermédiaire à tension continue (3) au moyen du deuxième système de réglage (32) dès que la quantité d'énergie stockée dans les unités de stockage à volant d'inertie (2) tombe en dessous d'une énergie minimum.

15. Procédé selon l'une des revendications 10 à 14, comprenant les étapes supplémentaires :
- mesure en continu (KM) de la qualité de la tension dans les réseaux de tension externes (ES1, ES2) reliés au module de stockage d'énergie (1) par une ou plusieurs unités de mesure (7) du module de stockage d'énergie,
- émission d'un signal de mode d'urgence (NFS) dans le module de stockage d'énergie (1) par une unité de mesure (7) en cas de surtension ou de sous-tension dans au moins l'un des réseaux de tension externes raccordés (ES1, ES2),
- coupure du ou des réseaux de tension externes (ES1, ES2) au moins du circuit intermédiaire à tension continue (2) par le premier système de réglage (31),
- passage des unités de stockage à volant d'inertie (2) du mode normal (NO) au mode d'urgence (NF) et alimentation du réseau d'alimentation interne (4) avec la puissance d'alimentation requise (VL) par le deuxième système de réglage (32) à partir du circuit intermédiaire à tension continue (3) en réaction automatique à une chute de la tension continue (GS) dans le circuit intermédiaire à tension continue (3) ou en réaction automatique sur la base du signal de mode d'urgence (NFS),
- émission d'un signal de mode normal (NOS) par les unités de mesure (7) lorsque le réseau de tension externe (ES1, ES2) est de nouveau disponible,
- passage du module de stockage d'énergie (1) du mode d'urgence (NF) en mode normal (NO) et
- connexion du réseau d'alimentation interne (4) au ou aux réseaux de tension externes (ES2), de préférence par le deuxième système de réglage (32), en réaction automatique sur la base du signal de mode normal (NOS).
